(19) Europäisches Patentamt

European Patent Office

Office européen des brevets

(11) **EP 1 271 338 A2**

(12) **EUROPEAN PATENT APPLICATION**

(43) Date of publication:
02.01.2003 Bulletin 2003/01

(51) Int Cl.7: **G06F 17/14**

(21) Application number: **02014250.1**

(22) Date of filing: **26.06.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **29.06.2001 JP 2001200138**

(71) Applicant: **NEC CORPORATION**
**Tokyo (JP)**

(72) Inventor: **Katayanagi, Satoshi, NEC Corporation**
**Tokyo (JP)**

(74) Representative: **Baronetzky, Klaus, Dipl.-Ing.**
**Splanemann Reitzner**
**Baronetzky Westendorp**
**Patentanwälte**
**Rumfordstrasse 7**
**80469 München (DE)**

(54) **Pipeline processor for complex vector operation**

(57)    In a complex vector operation processor for carrying out a complex vector operation, first and second multipliers (64-1, 64-2) are provided in parallel. The first multiplier calculates first product data of first data and second data, and the second multiplier calculates second product data of third data and fourth data. A first adder (66) is operatively connected with the outputs of the first and second multipliers to calculate first addition resultant data or first subtraction resultant data from the first and second product data. The second and third adders (70-1, 70-2) are operatively connected with the output of the first adder section and arranged in parallel. The second adder calculates second addition resultant data or second subtraction resultant data from fifth data and sixth data. The third adder calculates third addition resultant data or third subtraction resultant data from seventh data and eighth data. The data output section is operatively connected with the second and third adders to produce complex operation resultant data from two of the second addition resultant data, the second subtraction resultant data, the third addition resultant data, and the third subtraction resultant data.

Fig. 3A

EP 1 271 338 A2

# Fig. 3B

INSTRUCTION CONTROL UNIT — 16

22

PIPELINE PROCESSING UNIT

DATA INPUT SHIFT SECTION

54-1-3 XL3 / 54-1-4 XL4
54-2-3 XH3 / 54-2-4 XH4
54-3-3 YL3 / 54-3-4 YL4
54-4-3 YH3 / 54-4-4 YH4

PIPELINE OPERATION SECTION

DATA OUTPUT SHIFT SECTION

**Description**

**Background of the Invention**

1. Field of the Invention

The present invention relates to a complex vector operation processor and a system using the same, and more particularly to a complex vector operation processor which carries out a complex vector operation in pipeline processing and a system using the same.

2. Description of the Related Art

Conventional, a complex vector operation is used in various fields. Especially, a butterfly operation as the complex vector operation is used in FFT (fast Fourier transform) and IFFT (inverse fast Fourier transform).

The butterfly operation is a basic calculation in FFT/IFFT and is shown by the following equation (1) in FFT/ IFFT of radix-2:

$$A(m+1) = A(m) + B(m)*W(n, k)$$

$$B(m+1) = A(m) - B(m)*W(n, k) \tag{1}$$

Here, **A, B, W** are the complex vector data, and **A** and **B** are input signals or middle calculation resultant signals of FFT/IFFT. **W** is a coefficient called a twiddle factor. Generally, when the number of input data is N in FFT/ IFFT, the basic calculation of the above equation (1) is carried out time of $(N/2)\log_2 N$.

When the above equation (1) is rewritten using a real part (Ar, Br and Wr) of the complex vector data **A**, **B**, **W** and an imaginary part (Ai, Bi and Wi), the following equation (2) is obtained. Here, (m) and (n,k) are omitted on the right side:

$$Ar(m+1) = Ar + (Br*Wr - Bi*Wi)$$

$$Ai(m+1) = Ar + (Br*Wi + Bi*Wr)$$

$$Br(m+1) = Ar - (Br*Wr - Bi*Wi)$$

$$Bi(m+1) = Ai - (Br*Wi + Bi*Wr) \tag{2}$$

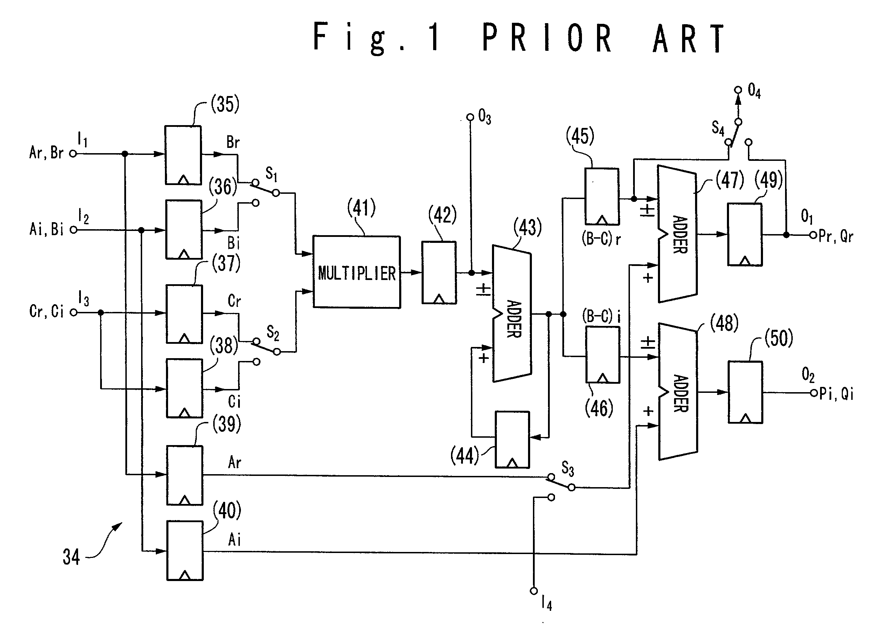

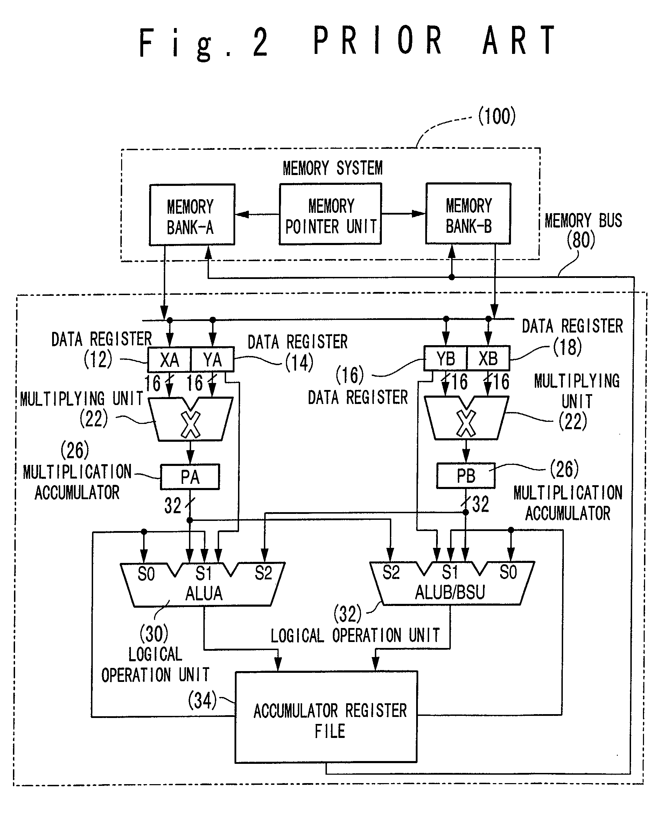

It is general that an exclusive use FFT circuit as shown in Fig. 1 is used for conventional FFT/IFFT calculation or a general signal processor shown in Fig. 2. The FFT circuit shown in Fig. 1 is described in Japanese Laid Open Patent application (JP-A-Heisei 5-174046) and the signal processor shown in Fig. 2 is described in Japanese Laid Open Patent application (JP-A-Heisei 11-85466).

The FFT circuit shown in Fig. 1 is comprised of one multiplier (41) and three adders (43), (47) and (48), and carries out complex multiplication **B**(m)***W**(n,k), i.e., Br*Wr - Bi*Wi and Br*Wi + Bi*Wr through four cycles using the multiplier (41) and the adder (43). Complex addition and subtraction calculation of **A**(m) - **B**(m)***W**(n,k) and **A**(m) + **B** (m)***W**(n,k) are carried out using the adders (47) and (48) at the latter stage. In the calculation period necessary for the complex addition and subtraction calculation is 2 cycles, and consequently, the operation efficiency of the adders (47) and (48) are 50% only.

On the other hand, in the signal processor shown in Fig. 2, multiplication units (22) and (24) are arranged in parallel, and logical operation units (30) and (32) are also arranged in parallel. The logical operation unit acts as a 3-input adder. In the first calculation cycle of the multiplication units (22) and (24), of the complex multiplication of **B** (m)***W**(n,k), two multiplication in the real part, i.e., Br*Wr and Bi*Wi are carried out. In the second calculation cycle, two multiplication in the imaginary part, i.e., Br*Wi and Bi*Wr are carried out. Subsequently, in the first calculation cycle of the logical operation units (30) and (32), Ar + (Br*Wr - Bi*Wi) and Ar - (Br*Wr - Bi*Wi) are calculated based on the calculation resultant data Br*Wr and Bi*Wi in the first calculation cycle of the multiplication units (22) and (24) and the real part Ar supplied from an accumulator register file (34). Also, in the second calculation cycle of the logical operation units (30) and (32), Ar + (Br*Wi + Bi*Wr) and Ai - (Br*Wi + Bi*Wr) are calculated based on the calculation resultant data Br*Wi and Bi*Wr in the second calculation cycle of the multiplication units (22) and (24) and the imaginary part Ai supplied from the accumulator register file (34).

In this way, the butterfly operation is possible to be carried out in 2 cycles. However, it is described in the reference that when a data load cycle is considered, the total number of calculation cycles is 4 cycles. The reason why the excessive 2 cycles is necessary for the data load cycle is not clearly mentioned in the reference. However, the causes could be supposed that there is only one data bus and the data of Ar and Ai must be stored in accumulator register file (34) once.

In the above-mentioned conventional butterfly operation, in the FFT circuit shown in Fig. 10, the number of cycles required for the butterfly operation once is 4 cycles which is low-speed. Also, the operation percentage of the adder is as low as 50% and the operation efficiency are low. Also, when the FFT circuit of Fig. 10 is applied to the ADSL communication apparatus, the complex vector operations other than FFT/IFFT must be carried out by another circuit. Thus, there is a problem that the scale of the hardware becomes large.

In the signal processor shown in Fig. 2, the input/output data transfer takes time. For this reason, calculation itself can be ended in two cycles, but the total butterfly operation containing the data load cycle needs four cycles for once of the butterfly operation. Thus, the operation efficiency is not good. Also, 3-input adder is used for the butterfly operation. When the adder is used for the floating-point arithmetic calculation, the 3-input adder must have a complicated circuit structure, compared with the 2-input adder.

In conjunction with the above description, a butterfly operation circuit is described in Japanese Laid Open Patent Application (JP-A-Showa 63- 73473). In this reference, a single multiplication circuit is used, like FFT of Fig. 10.

Also, a calculation unit is described in Japanese Laid Open Patent application (JP-A-Heisei 4-276869). In this conventional example, a multiplication result accumulation unit is only shown.

Therefore, an object of the present invention is to provide a complex vector operation processor which can carry out a butterfly operation for FFT/IFFT calculation efficiently.

Also, another object of the present invention is to provide a complex vector operation processor which can carry out a complex vector operation by efficiently using as few elements as possible.

Also, another object of the present invention is to provide a complex vector operation processor which can carry out pipeline processing in a complex vector operation.

Also, another object of the present invention is to provide a complex vector operation processor which can carry out pipeline processing in a complex vector operation in few clock cycles, for example, in two clock cycles.

Also, another object of the present invention is to provide a complex vector operation processor which has a bus structure suitable for efficient pipeline processing in a complex vector operation, without decrease of the operation efficiency of arithmetic units.

Also, another object of the present invention is to provide a complex vector operation processor in which a floating-point arithmetic calculation can be easily realized in a complex vector operation.

Also, another object of the present invention is to provide a complex vector operation processor which can carry out other complex vector operations in addition to a butterfly operation for FFT or IFFT efficiently.

Also, another object of the present invention is to provide a computer system which uses one of the above-mentioned complex vector operation processors.

Also, anther object of the present invention is to provide an ADSL communication system which uses one of the above-mentioned complex vector operation processors.

In an aspect of the present invention, a complex vector operation processor for carrying out a complex vector operation includes first and second multiplier sections, first to third adder sections, and a data output section. The first and second multiplier sections are provided in parallel. The first multiplier section calculates first product data of first data as one of a first group of data and second data as one of a second group of data, and the second multiplier section calculates second product data of third data as one of a third group of data and fourth data as one of a fourth group of data. The first adder section is operatively connected with outputs of the first and second multiplier sections to calculate first addition resultant data or first subtraction resultant data from the first and second products based on a first adder section control signal. The second and third adder sections are operatively connected with output of the first adder section and arranged in parallel. The second adder section calculates second addition resultant data or second subtraction resultant data from fifth data as one of a fifth group of data and sixth data as one of a sixth group of data based on a second adder section control signal. The third adder section calculates third addition resultant data or third subtraction resultant data from seventh data as one of a seventh group of data and eighth data as one of an eighth group of data based on a third adder section control signal, wherein the first addition or subtraction data is contained in the fifth group of data and in the seventh group of data. The data output section is operatively connected with the second and third adder sections to produce complex operation resultant data from two of the second addition resultant data, the second subtraction resultant data, the third addition resultant data, and the third subtraction resultant data.

Here, the complex vector operation processor may further include a bus group, a storage section and a data supply section. The bus group has a plurality of input buses and an output bus, and the data output section outputs the complex operation resultant data on the output bus. Here, it is desirable that the processor has the two input buses and the one output bus. The storage section stores complex operation data as complex vector data or real number data to be subjected to the complex vector operation, outputs the complex operation data onto at least one of the plurality of input buses and inputs the complex operation resultant data from the output bus to store therein. The data supply section reads the complex operation data from the input bus and supplies the read complex operation data to the first and second multiplier sections and the second and third adder sections.

In this case, the data supply section may read the complex operation data from the input bus, and may supply each of a real part of the complex operation data and an imaginary part of the complex operation data as at least one of the first to fourth groups of data.

In this case, the data supply section may supply each of the real part and the imaginary part of the complex operation data as at least one of the fifth to eighth groups of data with a predetermined delay time.

Also, the second adder section may be operatively connected with the output of the first multiplier section, and the third adder section is operatively connected with the output of the second multiplier section, and the fifth group of data contains the first product data, and the seventh group of data contains the second product data.

Also, the sixth group of data contains constant data of 0 and the eighth group of data contains constant data of 0.

Also, the data output section may include a real part output section, an imaginary part output section, first to third latch sections, and output section first and second selectors. The real part output section outputs a real part of the complex operation resultant data onto the output bus, and the imaginary part output section outputs an imaginary part of the complex operation resultant data onto the output bus. The first latch section is connected to the second adder section to latch the second addition or subtraction resultant data, the second latch section is connected to the third adder section to latch the third addition or subtraction resultant data, and the third latch section is connected to the first latch to latch an output of the first latch. The output section first selector is connected with the first latch and the second latch to output one of the output of the first latch and an output of the second latch to the imaginary part output section as the imaginary part of the complex operation resultant data. The output section second selector is connected with the second latch and the third latch to output one of the output of the second latch and an output of the third latch to the real part output section as the real part of the complex operation resultant data.

In another aspect of the present invention, a complex vector operation processor includes first and second multiplier sections, first to third adder sections, a data output section and a control unit. The first and second multiplier sections are provided in parallel to produce first and second product data, respectively. The first adder section is operatively connected with outputs of the first and second multiplier sections to produce first addition or subtraction resultant data based on a first operation control signal. The second and third adder sections are arranged in parallel and operatively connected with an output of the first adder section and the outputs of the first and second multiplier sections to produce second and third addition or subtraction resultant data based on second and third operation control signals, respectively. The data output section is operatively connected with outputs of the second and third adder sections to produce complex operation resultant data. The control unit generates the first to the operation control signals based on the complex vector operation, and controls the first and second multiplier sections, and the first to third adder sections, and the data output section to carry out pipeline processing for the complex vector operation.

Here, a butterfly operation of the complex vector operation is carried substantially out in pipeline processing of two clocks.

Also, the control unit may generate first to eighth selection signals. The first multiplier section may include first and second selectors which are respectively controlled based on the first and second selection signals, and the second multiplier section may include third and fourth selectors which are respectively controlled based on the third and fourth selection signals. The second adder section may include fifth and sixth selectors, which are respectively controlled based on the fifth and sixth selection signals, and the third adder section may include seventh and eighth selectors, which are respectively controlled based on the seventh and eighth selection signals.

Also, the control unit may further generate ninth to tenth selection signals. In this case, the output section may include first and second selectors. The first selector selects one of data obtained by delaying the output of the second adder section once and the output of the third adder section. The second selector selects one of data obtained by delaying the output of the second adder section twice and data obtained by delaying the output of the third adder section once.

Also, the control unit may generate timing control signals such that the first and second multiplier sections operate in response to a first timing control signal, the first adder section operates in response to the second timing control signal, the second and third adder sections operate in response to the third timing control signal, and the data output section in response to the fourth and fifth timing control signals.

Also, the control unit may instruct each of the first to third adder sections to calculate subtraction or addition.

Also, the complex vector operation processor may further include an instruction memory which stores an instruction set. In this case, the control unit controls the first and second multiplier sections, and the first to third adder sections based on the instruction set in response to a calculation start command.

Also, the instruction memory may store the instruction set for either one of a butterfly operation, a transfer operation, a bit reverse transfer operation, a complex vector multiplication operation, a complex vector conjugate multiplication operation, a complex addition or subtraction operation, a complex vector square power operation, and a real number - complex vector multiplication operation.

In another aspect of the present invention, a complex vector operation processor which can carry out a butterfly operation of first and second complex vector data ($A$, $B$) using twiddle factor data as third complex vector data ($W$), as a complex vector operation. The complex vector operation processor includes first and second multiplier sections and first to third adder sections. The first multiplier section calculates multiplication of an imaginary part (Wi) of the third complex vector data ($W$) and an imaginary part (Bi) of the second complex vector data ($B$) in a first process of pipeline processing to generate first process first product data (Bi*Wi), and calculates multiplication of a real part (Wr) of the third complex vector data ($W$) and the imaginary part (Bi) of the second complex vector data ($B$) in a second process of the pipeline processing to generate second process first product data (Bi*Wr). The second multiplier section calculates multiplication of the real part (Wr) of the third complex vector data ($W$) and a real part (Br) of the second complex vector data ($B$) in the first process to generate first process second product data (Br*Wr), and calculates multiplication of the imaginary part (Wi) of the third complex vector data ($W$) and the real part (Br) of the second complex vector data ($B$) in the second process to generate second process second product data (Br*Wi). The first adder section calculates subtraction of the first process first product data (Bi*Wi) from the first process second product data (Br*Wr) in the first process to produce first process first subtraction resultant data (Br*Wr - Bi*Wi), and calculates addition of the second process first product data (Bi*Wr) and the second process second product data (Br*Wi) in the second process to produce second process first addition resultant data (Bi*Wr + Br*Wi). The second adder section calculates subtraction of the first process first subtraction resultant data (Br*Wr - Bi*Wi) from a real part (Ar) of the first complex vector data ($A$) in the first process to produce first process second subtraction resultant data (Ar - (Br*Wr - Bi*Wi)), and calculates subtraction of the second process first addition resultant data (Br*Wi + Bi*Wr) from an imaginary part (Ai) of the first complex vector data ($A$) in the second process to produce second process second subtraction resultant data (Ai - (Br*Wi + Bi*Wr)). The third adder section calculates addition of the first process first subtraction resultant data (Br*Wr - Bi*Wi) and the real part (Ar) of the first complex vector data ($A$) in the first process to produce first process third addition resultant data (Ar + (Br*Wr - Bi*Wi)), and calculate addition of the second process first addition resultant data (Br*Wi + Bi*Wr) and the imaginary part (Ai) of the first complex vector data ($A$) in the second process to produce second process third addition resultant data (Ai + (Br*Wi + Bi*Wr)).

Also, the complex vector operation may be a transfer operation or a bit reverse transfer operation of the first complex vector data ($A$). In this case, the second adder section may calculate addition of the imaginary part (Ai) of the first complex vector data ($A$) and constant data of 0 in the first process to produce first process second addition resultant data (Ai). The third adder section may calculate addition of the real part (Ar) of the first complex vector data ($A$) and the constant data of 0 in the first process to produce first process third addition resultant data (Ar). The first complex vector data ($A$) is stored at an address designated based on an instruction.

Also, the complex vector operation may be a complex vector multiplication operation of the first complex vector data ($A$) and the second complex vector data ($B$). In this case, the first multiplier section may calculate multiplication of the imaginary part (Ai) of the first complex vector data ($A$) and the imaginary part (Bi) of the second complex vector data ($B$) in the first process to generate first process first product data (Ai*Bi), and may calculate multiplication of the real part (Br) of the second complex vector data ($B$) and the imaginary part (Ai) of the first complex vector data ($A$) in the second process to generate second process first product data (Ai*Br). The second multiplier section may calculate multiplication of the real part (Br) of the second complex vector data ($B$) and the real part (Ar) of the first complex vector data ($A$) in the first process to generate first process second product data (Ar*Br), and may calculate multiplication of the imaginary part (Bi) of the second complex vector data ($B$) and the real part (Ar) of the first complex vector data ($A$) in the second process to generate second process second product data (Ar*Bi). The first adder section may calculate subtraction of the first process first product data (Ai*Bi) from the first process second product data (Ar*Br) in the first process to produce first process first subtraction resultant data (Ar*Br - Ai*Bi), and may calculate addition of the second process first product data (Ai*Br) and the second process second product data (Ar*Bi) in the second process to produce second process first addition resultant data (Ai*Br + Ar*Bi). The third adder section may calculate addition of the first process first subtraction resultant data (Ar*Br - Ai*Bi) and constant data of 0 in the first process to produce first process third addition resultant data (Ar*Br - Ai*Bi), and calculate addition of the second process first addition resultant data (Ar*Bi + Ai*Br) and the constant data of 0 in the second process to produce second process third addition resultant data (Ar*Bi + Ai*Br).

Also, the complex vector operation may be a complex vector conjugate multiplication operation of the first complex vector data ($A$) and the second complex vector data ($B$) which is a complex conjugate of complex vector data. In this case, the first multiplier section may calculate multiplication of the imaginary part (Ai) of the first complex vector data ($A$) and the imaginary part (Bi) of the second complex vector data ($B$) in the first process to generate first process first product data (Ai*Bi), and may calculate multiplication of the real part (Br) of the second complex vector data ($B$)

and the imaginary part (Ai) of the first complex vector data (**A**) in the second process to generate second process first product data (Ai*Br). The second multiplier section may calculate multiplication of the real part (Br) of the second complex vector data (**B**) and the real part (Ar) of the first complex vector data (**A**) in the first process to generate first process second product data (Ar*Br), and may calculate multiplication of the imaginary part (Bi) of the second complex vector data (**B**) and the real part (Ar) of the first complex vector data (**A**) in the second process to generate second process second product data (Ar*Bi). The first adder section may calculate addition of the first process first product data (Ai*Bi) and the first process second product data (Ar*Br) in the first process to produce first process first addition resultant data (Ar*Br + Ai*Bi), and may calculate subtraction of the second process second product data (Ar*Bi) from the second process first product data (Ai*Br) in the second process to produce second process first addition resultant data (Ai*Br - Ar*Bi). The third adder section may calculate addition of the first process first subtraction resultant data (Ar*Br + Ai*Bi) and constant data of 0 in the first process to produce first process third addition resultant data (Ar*Br + Ai*Bi), and calculate addition of the second process first subtraction resultant data (Ai*Br - Ar*Bi) and the constant data of 0 in the second process to produce second process third addition resultant data (Ai*Br - Ar*Bi).

Also, the complex vector operation may be a complex addition or subtraction operation between the first complex vector data (**A**) and the second complex vector data (**B**). In this case, the second adder section may calculate addition or subtraction between the imaginary part (Ai) of the first complex vector data (**A**) and the imaginary part (Bi) of the second complex vector data (**B**) in the first process to generate first process second addition or subtraction data (Ai $\pm$ Bi). The third adder section may calculate addition or subtraction between the real part (Ar) of the first complex vector data (**A**) and the real part (Br) of the second complex vector data (**B**) in the first process to generate first process third addition or subtraction data (Ar $\pm$ Br).

Also, the complex vector operation may be a complex vector square power operation of the first complex vector data (**A**). In this case, the first multiplier section may calculate multiplication of the imaginary part (Ai) of the first complex vector data (**A**) and the imaginary part (Ai) of the first complex vector data (**A**) in the first process to generate first process first product data (Ai*Ai). The second multiplier section may calculate multiplication of the real part (Ar) of the first complex vector data (**A**) and the real part (Ar) of the first complex vector data (**A**) in the first process to generate first process second product data (Ar*Ar). The first adder section may calculate addition of the first process first product data (Ai*Ai) and the first process second product data (Ar*Ar) in the first process to produce first process first addition resultant data (Ar*Ar + Ai*Ai). The third adder section may calculate addition of the first process first addition resultant data (Ar*Ar + Ai*Ai) and constant data of 0 in the first process to produce first process third addition resultant data (Ar*Ar + Ai*Ai).

Also, the complex vector operation may be the real number - complex vector multiplication operation of first complex vector data (**A**) and a first real number (k1) and a second real number (k2). The first multiplier section may calculate multiplication of the imaginary part (Ai) of the first complex vector data (**A**) and the first real number (k1) in the first process to generate first process first product data (k1*Ai), and may calculate multiplication of the imaginary part (Ai) of the first complex vector data (**A**) and the second real number (k2) in the second process to generate second process first product data (k2*Ai). The second multiplier section may calculate multiplication of the real part (Ar) of the first complex vector data (**A**) and the first real number (k1) in the first process to generate first process second product data (k1*Ar), and may calculate multiplication of the real part (Ar) of the first complex vector data (**A**) and the second real number (k2) in the second process to generate second process second product data (k2*Ar). The second adder section may calculate addition of the first process first product data (k1*Ai) and constant data of 0 in the first process to produce first process second addition resultant data (k1*Ai), and may calculate addition of the second process first product data (K2*Ai) and constant data of 0 in the second process to produce second process second addition resultant data (K2*Ai). The third adder section may calculate addition of the first process second product data (k1*Ar) and the constant data of 0 in the first process to produce first process third addition resultant data (K1*Ar), and may calculate addition of the second process second product data (k1*Ar) and the constant data of 0 in the second process to produce second process third addition resultant data (k2*Ar).

In another aspect of the present invention, a computer system includes a complex vector operation processor, a main memory which stores complex vector data and instruction sets, and a main CPU which reads out one of the instruction sets from the main memory to supply to the complex vector operation processor. The complex vector operation processor may include first and second multiplier sections, first to third adder sections, a data output section and a control unit. The first and second multiplier sections are provided in parallel to produce first and second product data, respectively. The first adder section is operatively connected with outputs of the first and second multiplier sections to produce first addition or subtraction resultant data based on a first operation control signal. The second and third adder sections are arranged in parallel and operatively connected with an output of the first adder section and the outputs of the first and second multiplier sections to produce second and third addition or subtraction resultant data based on second and third operation control signals, respectively. The data output section is operatively connected with outputs of the second and third adder sections to produce complex operation resultant data. The control unit generates the first to the operation control signals based on the instruction set, and controls the first and second multiplier sections, and the first to third adder sections, and the data output section to carry out pipeline processing for the complex vector operation.

The main CPU reads out the complex vector data from the main memory to supply to the complex vector operation processor as the complex vector data.

In another aspect of the present invention, an ADSL communication apparatus includes a complex vector operation processor, a main memory which stores instruction sets, a first interface section which supplies complex vector data to the complex vector operation processor, a second interface section which supplies data corresponding to calculation resultant data from the complex vector operation processor, and a main CPU which reads out one of the instruction sets from the main memory to supply to the complex vector operation processor. The complex vector operation processor may include first and second multiplier sections, first to third adder sections, a data output section and a control section. The first and second multiplier sections are provided in parallel to produce first and second product data, respectively. The first adder section is operatively connected with outputs of the first and second multiplier sections to produce first addition or subtraction resultant data based on a first operation control signal. The second and third adder sections are arranged in parallel and operatively connected with an output of the first adder section and the outputs of the first and second multiplier sections to produce second and third addition or subtraction resultant data based on second and third operation control signals, respectively. The data output section is operatively connected with outputs of the second and third adder sections to produce complex operation resultant data. The control unit generates the first to the operation control signals based on the instruction set, and controls the first and second multiplier sections, and the first to third adder sections, and the data output section to carry out pipeline processing for the complex vector operation.

In another aspect of the present invention, a method of complex vector operation, may be achieved: by (a) generating first to tenth selection signals, first to fifth operation control signals, and sequential timing control signals based on an instruction set in response to an operation start signal; by (b) selecting as first data, one of a first group of data based on the first selection signal in response to each of the sequential timing control signals by a first selector; by (c) selecting as second data, one of a second group of data based on the second selection signal in response to each of the sequential timing control signals by a second selector; by (d) selecting as third data, one of a third group of data based on the third selection signal in response to each of the sequential timing control signals by a third selector; by (e) selecting as fourth data, one of a fourth group of data based on the fourth selection signal in response to each of the sequential timing control signals by a fourth selector; by (f) calculating multiplication of the first data and the second data based on the first operation control signal in response to each of the sequential timing control signals by a first multiplier to produce first product data; by (g) calculating multiplication of the third data and the fourth data based on the second operation control signal in response to each of the sequential timing control signals by a second multiplier to produce second product data; by (h) calculating addition or subtraction between the first product data and the second product data based on the third operation control signal in response to each of the sequential timing control signals by a first adder to produce first addition or subtraction resultant data; by (i) selecting as fifth data, one of a fifth group of the first product data, the first addition or subtraction resultant data, and delayed twelfth data based on the fifth selection signal in response to each of the sequential timing control signals by a fifth selector; by (j) selecting as sixth data, one of a sixth group of delayed tenth data, delayed previous ninth data and 0 data based on the sixth selection signal in response to each of the sequential timing control signals by a sixth selector, the delayed previous ninth data being outputted earlier by one of the timing control signals than delayed ninth data; by (k) selecting as seventh data, one of a seventh group of the second product data, the first addition or subtraction resultant data, and delayed eleventh data based on the seventh selection signal in response to each of the sequential timing control signals by a seventh selector; by (l) selecting as eighth data, one of an eighth group of the delayed ninth data, the delayed previous ninth data and 0 data based on the eighth selection signal in response to each of the sequential timing control signals by a eighth selector; by (m) calculating addition or subtraction between the fifth data and the sixth data based on the fourth operation control signal in response to each of the sequential timing control signals by a second adder to produce second addition or subtraction resultant data; by (n) calculating addition or subtraction between the seventh data and the eighth data based on the fifth operation control signal in response to each of the sequential timing control signals by a third adder to produce third addition or subtraction resultant data; by (o) selecting as an imaginary part of complex operation resultant data, one of a delayed one of the second addition or subtraction resultant data and the third addition or subtraction resultant data based on the ninth selection signal in response to each of the sequential timing control signals by a ninth selector; and by (p) selecting as a real part of complex operation resultant data, one of a delayed one of the delayed second addition or subtraction resultant data as twice delayed second addition or subtraction resultant data and a delayed one of the third addition or subtraction resultant data based on the ninth selection signal in response to each of the sequential timing control signals by a ninth selector.

Also, the (b) to (e) selecting steps may be carried out in response to a first timing control signal of the timing control signals, the (m) and (n) calculating steps may be carried out in response to a fifth timing control signal next to the fourth timing control signal of the timing control signals, and the (o) to (p) selecting steps may be carried out in response to a sixth timing control signal after the fifth timing control signal of the timing control signals.

Also, a complex vector operation to be carried out may be a butterfly operation of first and second complex vector data (**A**, **B**) using twiddle factor data as third complex vector data (**W**). The b) selecting step may be achieved by selecting an imaginary part (Wi) of the third complex vector data (**W**) as the first data in response to a first timing control signal of the timing control signals, and a real part (Wr) of the third complex vector data (**W**) as the first data in response to a second timing control signal of the timing control signals. The (c) selecting step may be achieved by selecting an imaginary part (Bi) of the second complex vector data (**B**) as the second data in response to the first timing control signal, and the imaginary part (Bi) of the second complex vector data (**B**) as the second data in response to the second timing control signal. The (f) calculating step may be achieved by multiplying the imaginary part (Wi) of the third complex vector data (**W**) and the imaginary part (Bi) of the second complex vector data (**B**) in response to the second timing control signal to generate first process first product data (Bi*Wi), and multiplying the real part (Wr) of the third complex vector data (**W**) and the imaginary part (Bi) of the second complex vector data (**B**) in response to a third timing control signal of the timing control signals to generate second process first product data (Bi*Wr). The (d) selecting step may be achieved by selecting the real part (Wr) of the third complex vector data (**W**) as the third data in response to the first timing control signal and selecting the imaginary part (Wi) of the third complex vector data (**W**) as the third data in response to the second timing control signal. The (e) selecting step may be achieved by selecting a real part (Br) of the second complex vector data (**B**) as the fourth data in response to the first timing control signal and selecting the real part (Br) of the second complex vector data (**B**) as the fourth data in response to the second timing control signal. The (g) calculating step may be achieved by multiplying the real part (Wr) of the third complex vector data (**W**) and the real part (Br) of the second complex vector data (**B**) in response to the second timing control signal to generate first process second product data (Br*Wr), and multiplying the imaginary part (Wi) of the third complex vector data (**W**) and the real part (Br) of the second complex vector data (**B**) in response to the third timing control signal to generate second process second product data (Br*Wi). The (h) calculating step may be achieved by subtracting the first process first product data (Bi*Wi) from the first process second product data (Br*Wr) in response to the third timing control signal to produce first process first subtraction resultant data (Br*Wr - Bi*Wi), and adding the second process first product data (Bi*Wr) and the second process second product data (Br*Wi) in response to a fourth timing control signal of the timing control signals to produce second process first addition resultant data (Bi*Wr + Br*Wi). The (i) selecting step may be achieved by selecting the first process first subtraction resultant data (Br*Wr - Bi*Wi) as the fifth data in response to the fourth timing control signal and the second process first addition resultant data (Br*Wi + Bi*Wr) as the fifth data in response to a fifth timing control signal of the timing control signals. The (j) selecting step may be achieved by selecting a real part (Ar) of the first complex vector data (**A**) as the sixth data in response to the fourth timing control signal, and an imaginary part (Ai) of the first complex vector data (**A**) as the sixth data in response to the fifth timing control signal. The (m) calculating step may be achieved by subtracting the first process first subtraction resultant data (Br*Wr - Bi*Wi) from the real part (Ar) of the first complex vector data (**A**) in response to the fifth timing control signal to produce first process second subtraction resultant data (Ar - (Br*Wr - Bi*Wi)), and subtracting the second process first addition resultant data (Br*Wi + Bi*Wr) from the imaginary part (Ai) of the first complex vector data (**A**) in response to a sixth timing control signal of the timing control signals to produce second process second subtraction resultant data (Ai - (Br*Wi + Bi*Wr)). The (k) selecting step may be achieved by selecting the first process first subtraction resultant data (Br*Wr - Bi*Wi) as the seventh data in response to the fourth timing control signal, and selecting the second process first addition resultant data (Br*Wi + Bi*Wr) as the seventh data in response to the fifth timing control signal. The (l) selecting step may be achieved by selecting the real part (Ar) of the first complex vector data (**A**) as the eighth data in response to the fourth timing control signal, and selecting the imaginary part (Ai) of the first complex vector data (**A**) as the eighth data in response to the fifth timing control signal. The (n) calculating step may be achieved by adding the first process first subtraction resultant data (Br*Wr - Bi*Wi) and the real part (Ar) of the first complex vector data (**A**) in response to the fifth timing control signal to produce first process third addition resultant data (Ar + (Br*Wr - Bi*Wi)), and adding the second process first addition resultant data (Br*Wi + Bi*Wr) and the imaginary part (Ai) of the first complex vector data (**A**) in response to a sixth timing control signal of the timing control signals to produce second process third addition resultant data (Ai + (Br*Wi + Bi*Wr)). The (o) selecting step may be achieved by selecting the second process second subtraction resultant data (Ai - (Br*Wi + Bi*Wr)) in response to a seventh timing control signal of the timing control signals, and second process third addition resultant data (Ai + (Br*Wi + Bi*Wr)) which is held in response to the seventh timing control signal, in response to an eighth timing control signal of the timing control signals. The (p) selecting step may be achieved by selecting the first process third addition resultant data (Ar + (Br*Wr - Bi*Wi)), which is held in response to the seventh timing control signal, in response to the eighth timing control signal, and the first process second subtraction resultant data (Ar - (Br*Wr - Bi*Wi)), which is held in response to the sixth timing control signal and the seventh timing control signal, in response to the eighth timing control signal.

Also, the instruction set is stored in the instruction memory for a transfer operation or a bit reverse transfer operation of the first complex vector data (**A**). In this case, the (i) selecting step may be achieved by selecting the imaginary part (Ai) of the first complex vector data (**A**) as the fifth data in response to the fourth timing control signal. The (j) selecting step may be achieved by selecting 0 in response to the fourth timing control signal in response to the fourth timing control signal. The (m) calculating step may be achieved by adding the imaginary part (Ai) of the first complex vector data (A) and 0 in response to the fifth timing control signal to produce first process second addition resultant data (Ai). The (k) selecting step may be achieved by selecting the real part (Ar) of the first complex vector data (**A**) as the seventh data in response to the fourth timing control signal. The (l) selecting step may be achieved by selecting 0 in response to the fourth timing control signal in response to the fourth timing control signal. The (n) calculating step may be achieved by adding the real part (Ar) of the first complex vector data (**A**) and 0 in response to the fifth timing control signal to produce first process third addition resultant data (Ar). The (o) selecting step may be achieved by selecting the first process second addition resultant data (Ai), which is held in response to the sixth timing control signal, in response to the seventh timing control signal. The (p) selecting step may be achieved by selecting the first process third addition resultant data (Ar), which is held in response to the sixth timing control signal, in response to the seventh timing control signal.

Also, the complex vector operation may be the complex vector multiplication operation of the first complex vector data (**A**) and the second complex vector data (**B**). In this case, the (b) selecting step may be achieved by selecting the imaginary part (Bi) of the second complex vector data (**B**) as the first data in response to the first timing control signal, and the real part (Br) of the third complex vector data (**B**) as the first data in response to a second timing control signal of the timing control signals. The (c) selecting step may be achieved by selecting an imaginary part (Ai) of the first complex vector data (**A**) as the second data in response to the first timing control signal, and in response to the second timing control signal. The (f) calculating step may be achieved by multiplying the imaginary part (Bi) of the second complex vector data (**B**) and the imaginary part (Ai) of the first complex vector data (**A**) in response to the second timing control signal to generate first process first product data (Ai*Bi), and multiplying the real part (Br) of the second complex vector data (**B**) and the imaginary part (Ai) of the first complex vector data (**A**) in response to the third timing control signal to generate second process first product data (Ai*Br). The (d) selecting step may be achieved by selecting the real part (Br) of the second complex vector data (**B**) as the second data in response to the first timing control signal and selecting the imaginary part (Bi) of the second complex vector data (**B**) as the third data in response to the second timing control signal. The (e) selecting step may be achieved by selecting the real part (Ar) of the first complex vector data (**A**) as the fourth data in response to the first timing control signal and in response to the second timing control signal. The (g) calculating step may be achieved by multiplying the real part (Br) of the second complex vector data (**B**) and the real part (Ar) of the first complex vector data (**A**) in response to the second timing control signal to generate first process second product data (Ar*Br), and multiplying the imaginary part (Bi) of the second complex vector data (**B**) and the real part (Ar) of the first complex vector data (**A**) in response to the third timing control signal to generate second process second product data (Ar*Bi). The (h) calculating step may be achieved by subtracting the first process first product data (Ai*Bi) from the first process second product data (Ar*Br) in response to the third timing control signal to produce first process first subtraction resultant data (Ar*Br - Ai*Bi), and adding the second process first product data (Ai*Br) and the second process second product data (Ar*Bi) in response to the fourth timing control signal to produce second process first addition resultant data (Ai*Br + Ar*Bi). The (k) selecting step may be achieved by selecting the first process first subtraction resultant data (Ar*Br - Ai*Bi) as the seventh data in response to the fourth timing control signal, and selecting the second process first addition resultant data (Ar*Bi + Ai*Br) as the seventh data in response to the fifth timing control signal. The (l) selecting step may be achieved by selecting 0 in response to the fourth timing control signal, and in response to the fifth timing control signal. The (n) calculating step may be achieved by adding the first process first subtraction resultant data (Ar*Br - Ai*Bi) and the 0 in response to the fifth timing control signal to produce first process third addition resultant data (Ar*Br - Ai*Bi), and adding the second process first addition resultant data (Ar*Bi + Ai*Br) and the 0 in response to the sixth timing control signal to produce second process third addition resultant data (Ar*Bi + Ai*Br). The (o) selecting step may be achieved by selecting the second process second subtraction resultant data (Ar*Bi + Ai*Br) in response to the seventh timing control signal. The (p) selecting step may be achieved by selecting the first process third addition resultant data (Ar*Br - Ai*Bi), which is held in response to the sixth timing control signal, in response to the seventh timing control signal.

Also, the operation may be the complex vector conjugate multiplication operation of the first complex vector data (**A**) and the second complex vector data (**B**) which is a complex conjugate of complex vector data. In this case, the (b) selecting step may be achieved by selecting the imaginary part (Bi) of the second complex vector data (**B**) as the first data in response to the first timing control signal, and the real part (Br) of the third complex vector data (**B**) as the first data in response to a second timing control signal of the timing control signals. The (c) selecting step may be achieved by selecting an imaginary part (Ai) of the first complex vector data (**A**) as the second data in response to the first timing control signal, and in response to the second timing control signal. The (f) calculating step may be achieved by multiplying the imaginary part (Bi) of the second complex vector data (**B**) and the imaginary part (Ai) of the first complex vector data (**A**) in response to the second timing control signal to generate first process first product data (Ai*Bi), and multiplying the real part (Br) of the second complex vector data (**B**) and the imaginary part (Ai) of the first complex vector data (**A**) in response to the third timing control signal to generate second process first product data (Ai*Br). The (d) selecting step may be achieved by selecting the real part (Br) of the second complex vector data (**B**) as the second data in response to the first timing control signal and selecting the imaginary part (Bi) of the second complex vector data (**B**) as the third data in response to the second timing control signal. The (e) selecting step may be achieved by selecting the real part (Ar) of the first complex vector data (**A**) as the fourth data in response to the first timing control signal and in response to the second timing control signal. The (g) calculating step may be achieved by multiplying the real part (Br) of the second complex vector data (**B**) and the real part (Ar) of the first complex vector data (**A**) in response to the second timing control signal to generate first process second product data (Ar*Br), and multiplying the imaginary part (Bi) of the second complex vector data (**B**) and the real part (Ar) of the first complex vector data (**A**) in response to the third timing control signal to generate second process second product data (Ar*Bi). The (h) calculating step may be achieved by adding the first process first product data (Ai*Bi) and the first process second product data (Ar*Br) in response to the third timing control signal to produce first process first addition resultant data (Ar*Br + Ai*Bi), and subtracting the second process second product data (Ar*Bi) from the second process first product data (Ai*Br) in response to the fourth timing control signal to produce second process first subtraction resultant data (Ai*Br - Ar*Bi). The (k) selecting step may be achieved by selecting the first process first addition resultant data (Ar*Br + Ai*Bi) as the seventh data in response to the fourth timing control signal, and selecting the second process first subtraction resultant data (Ai*Br - Ar*Bi) as the seventh data in response to the fifth timing control signal. The (l) selecting step may be achieved by selecting 0 in response to the fourth timing control signal, and in response to the fifth timing control signal. The (n) calculating step may be achieved by adding the first process first addition resultant data (Ar*Br + Ai*Bi) and the 0 in response to the fifth timing control signal to produce first process third addition resultant data (Ar*Br + Ai*Bi), and adding the second process first addition resultant data (Ai*Br - Ar*Bi) and the 0 in response to the sixth timing control signal to produce second process third addition resultant data (Ai*Br - Ar*Bi). The (o) selecting step may be achieved by selecting the second process third addition resultant data (Ai*Br - Ar*Bi) in response to the seventh timing control signal. The (p) selecting step may be achieved by selecting the first process third addition resultant data (Ar*Br + Ai*Bi), which is held in response to the sixth timing control signal, in response to the seventh timing control signal.

Also, the complex vector operation may be a complex addition or subtraction operation between the first complex vector data (**A**) and the second complex vector data (**B**). In this case, the (i) selecting step may be achieved by selecting the imaginary part (Bi) of the second complex vector data (**B**) as the fifth data in response to the fourth timing control signal. The (j) selecting step may be achieved by selecting the imaginary part (Ai) of the first complex vector data (**A**) as the sixth data in response to the fourth timing control signal. The (m) calculating step may be achieved by calculating addition or subtraction between the imaginary part (Ai) of the first complex vector data (**A**) and the imaginary part (Bi) of the second complex vector data (**B**) in response to the fifth timing control signal to produce first process second addition or subtraction resultant data (Ai $\pm$ Bi). The (k) selecting step may be achieved by selecting the real part (Br) of the second complex vector data (**B**) as the seventh data in response to the fourth timing control signal. The (j) selecting step may be achieved by selecting the real part (Ar) of the first complex vector data (**A**) as the eighth data in response to the fourth timing control signal. The (n) calculating step may be achieved by calculating addition or subtraction between the real part (Ai) of the first complex vector data (**A**) and the real part (Bi) of the second complex vector data (**B**) in response to the fifth timing control signal to produce first process third addition or subtraction resultant data (Ar $\pm$ Br). The (o) selecting step may be achieved by selecting the first process second addition or subtraction resultant data (Ai $\pm$ Bi), which is held in response to the sixth timing control signal, in response to the seventh timing control signal. The (p) selecting step may be achieved by selecting the first process third addition or subtraction resultant data (Ar $\pm$ Br), which is held in response to the sixth timing control signal, in response to the seventh timing control signal.

Also, the complex vector operation may be complex vector square power operation of the first complex vector data (**A**). In this case, the (b) selecting step may be achieved by selecting the imaginary part (Ai) of the second complex vector data (**A**) as the first data in response to the first timing control signal. The (c) selecting step may be achieved by selecting the imaginary part (Ai) of the second complex vector data (**A**) as the first data in response to the first timing control signal. The (f) calculating step may be achieved by multiplying the imaginary part (Ai) of the first complex vector data (**A**) and the imaginary part (Ai) of the first complex vector data (**A**) in response to the second timing control signal to generate first process first product data (Ai*Ai). The (d) selecting step may be achieved by selecting the real part (Ar) of the first complex vector data (**A**) as the second data in response to the first timing control signal. The (e) selecting step may be achieved by selecting the real part (Ar) of the first complex vector data (**A**) as the fourth data in response to the first timing control signal. The (g) calculating step may be achieved by multiplying the real part (Ar) of the first complex vector data (**A**) and the real part (Ar) of the first complex vector data (**A**) in response to the second timing control signal to generate first process second product data (Ar*Ar). The (h) calculating step may be achieved by adding the first process first product data (Ai*Ai) and the first process second product data (Ar*Ar) in response to the third timing control signal to produce first process first addition resultant data (Ar*Ar + Ai*Ai). The (k) selecting step may be achieved by selecting the first addition resultant data (Ar*Ar + Ai*Ai) as the seventh data in response to the fourth timing control signal. The (l) selecting step may be achieved by selecting 0 in response to the fourth timing control signal. The (n) calculating step may be achieved by adding the first addition resultant data (Ar*Ar + Ai*Ai) and the 0 in response to the fifth timing control signal to produce first process third addition resultant data (Ar*Ar + Ai*Ai). The (o) selecting step may be achieved by selecting the first process third addition resultant data (Ar*Ar + Ai*Ai), which is held in response to sixth timing control signal, in response to the seventh timing control signal.

Also, the complex vector operation may be a real number - complex vector multiplication operation of the first complex vector data (**A**) and a first real number (k1). In this case, the (b) selecting step may be achieved by selecting the real number (k1) as the first data in response to the first timing control signal. The (c) selecting step may be achieved by selecting the imaginary part (Ai) of the second complex vector data (**A**) as the first data in response to the first timing control signal. The (f) calculating step may be achieved by multiplying the real number (k1) and the imaginary part (Ai) of the first complex vector data (**A**) in response to the second timing control signal to generate first process first product data (k1*Ai). The (d) selecting step may be achieved by selecting the real number (k1) as the second data in response to the first timing control signal. The (e) selecting step may be achieved by selecting the real part (Ar) of the first complex vector data (**A**) as the fourth data in response to the first timing control signal. The (g) calculating step may be achieved by multiplying the real number (k1) and the real part (Ar) of the first complex vector data (**A**) in response to the second timing control signal to generate first process second product data (k1*Ar). The (i) selecting step may be achieved by selecting the first process first product data (k1*Ai) as the seventh data, which is held in response to the third timing control signal, in response to the fourth timing control signal. The (j) selecting step may be achieved by selecting 0 in response to the fourth timing control signal. The (m) calculating step may be achieved by adding the first process first product data (k1*Ai) and the 0 in response to the fifth timing control signal to produce first process third addition resultant data (k1*Ai). The (k) selecting step may be achieved by selecting the first process second product data (k1*Ar) as the seventh data, which is held in response to the third timing control signal, in response to the fourth timing control signal. The (l) selecting step may be achieved by selecting 0 in response to the fourth timing control signal. The (n) calculating step may be achieved by adding the first process second product data (k1*Ai) and the 0 in response to the fifth timing control signal to produce first process third addition resultant data (k1*Ar). The (o) selecting step may be achieved by selecting the first process second addition resultant data (k1*Ai), which is held in response to sixth timing control signal, in response to the seventh timing control signal. The (p) selecting step may be achieved by selecting the first process third addition resultant data (k1*Ar), which is held in response to sixth timing control signal, in response to the seventh timing control signal.

## Brief Description of the Drawings

Fig. 1 is a block diagram showing the circuit structure of a FFT circuit as a first conventional example;

Fig. 2 is a block diagram showing the circuit structure of a signal processor as a second conventional example;

Figs. 3A and 3B are a block diagram showing the circuit structure of a complex vector operation processor of the present invention;

Fig. 4 is a diagram showing the data structure of storage sections 20-1 and 20-2 in a data storage unit 20;

Fig. 5 is a diagram showing the data structure of the storage section 20-3 in the data storage unit 20;

Fig. 6 is a diagram showing the data structure of the storage section 20-4 in the data storage unit 20;

Figs. 7A and 7B are a diagram showing a pipeline processing of the complex vector operation processor of the present invention when a butterfly operation is carried out;

Fig. 8 is a block diagram showing the circuit structure when the complex vector operation processor of the present invention is applied to a computer system; and

Fig. 9 is a block diagram showing the circuit structure when the complex vector operation processor of the present invention is applied to the ADSL communication apparatus.

## Description of the Preferred Embodiments

Hereinafter, a complex vector operation processor of the present invention and a system using the same will be described in detail with reference to the attached drawings.

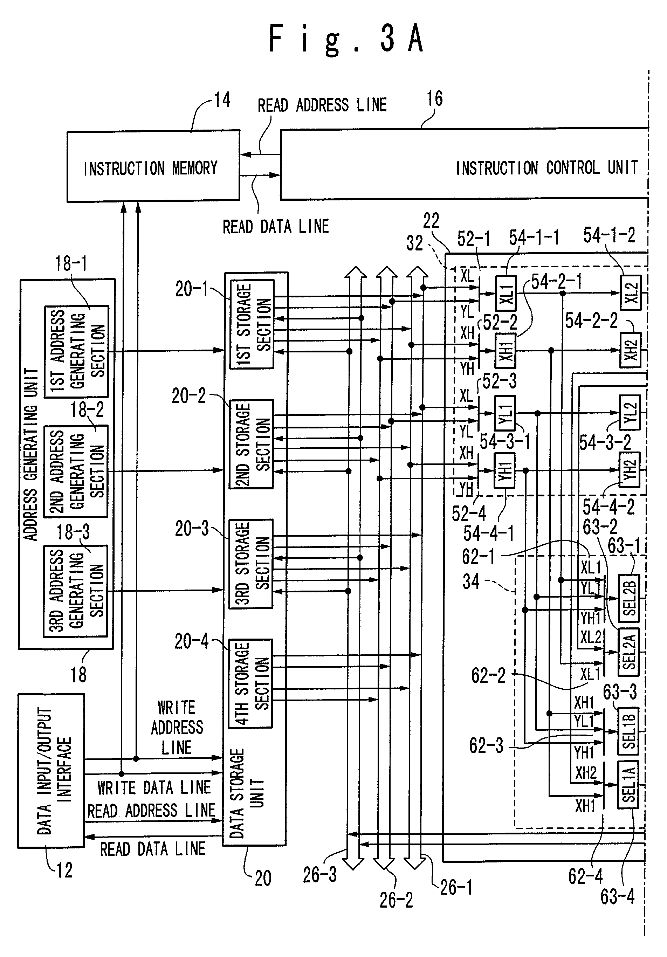

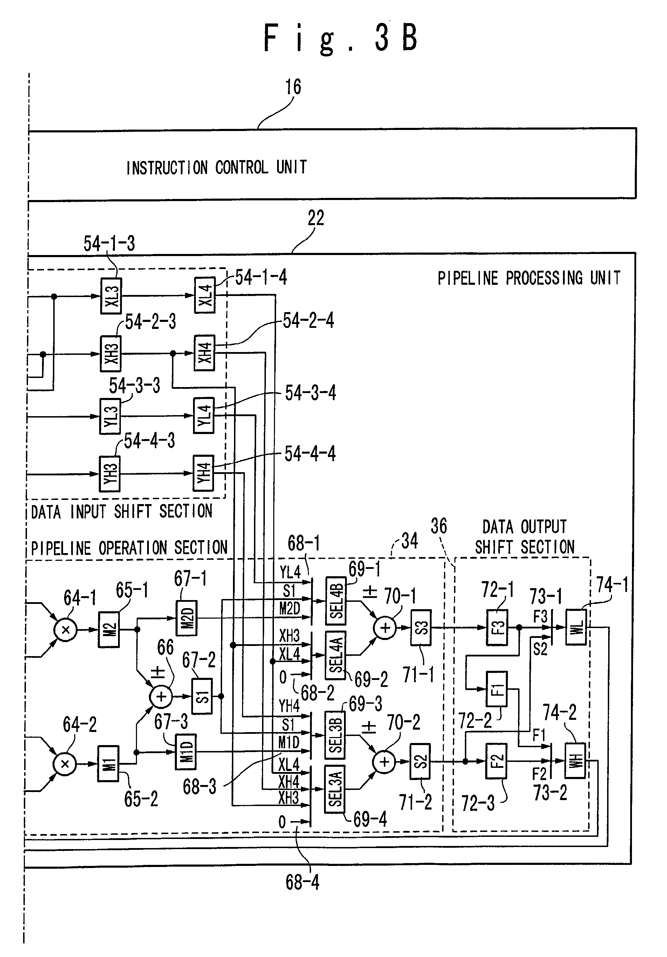

Figs. 3A and 3B show the circuit structure of the complex vector operation processor according to the first embodiment of the present invention. Referring to Figs. 3A and 3B, the complex vector operation processor 1 has a data input/output interface 12 connected a system bus (not shown), an instruction memory 14, an instruction control unit 16, an address generating unit 18, a data storage unit 20, and a pipeline processing unit 22. The data storage unit 20 is connected with the pipeline processing unit 22 through a data bus group 26.

The data bus group 26 is comprised of a first data input bus 26-1, a second data input bus 26-2, and a data output bus 26-3. The first data input bus 26-1 and the second data input bus 26-2 are used to supply complex vector data (real number data depending on an operation instruction) to the pipeline processing unit 22. Also, the data output bus 26-3 is used to transfer complex calculation resultant data (real number data depending on the operation instruction) as the calculation result from the pipeline processing unit 22.

Here, especially, in a butterfly operation, it is necessary to supply three kinds of the complex vector data to the pipeline processing unit 22. When the data input bus is one, three cycles become necessary to supply the complex vector data to the pipeline processing unit 22. In this case, if the pipeline processing of the butterfly operation supposes to be two cycles, the supply of the complex vector data to the pipeline processing unit 22 becomes a bottleneck, and causes the lowering of the operation efficiency.

In the first embodiment, the 2-system data input buses 26-1 and 26-2 and the 1-system data output bus 26-3 are provided. These data buses are arranged to be adaptable for the pipeline processing in the pipeline processing unit 22, and are provided to eliminate the above-mentioned problem of the lowering of the operation efficiency.

The data input/output interface 12 outputs a write address and write data which are supplied through the system bus, to the data storage unit 20 and the instruction memory 14. In this way, an instruction set from a host apparatus (not shown) is stored in the instruction memory 14 and the operation data is stored in the data storage unit 20.

The instruction set stored in the instruction memory 14 is a set of "vector operation instructions" for the complex vector operation executed by the complex vector operation processor 1. Also, a stop instruction to show an operation stop is stored in the instruction memory 14 in addition to the usual operation instructions.

The instruction control unit 16 is connected with the above system bus. The instruction control unit 16 controls the whole operation of the processor in response to a vector operation start command supplied through the system bus. That is, the instruction control unit 16 decodes the start command to interpret a kind of the calculating operation which should be executed, and selects one of instruction sets stored in the instruction memory 14. Then, the instruction control unit 16 fetches and decodes the first one of the vector operation instructions of the selected set from the instruction memory 14, and outputs various control signals. In this case, the instruction control unit 16 acquires a first address and a size of operation data stored in the data storage section 20, a first address of the data storage section 20 in which operation resultant data should be stored, the number of operation data and so on.

The control signals are generated such as a "setup signal" instructing initialization of the address generating unit 18, a "data selection control signal" instructing data selection in each of selectors in the pipeline processing unit 22, an "operation enabling signal" instructing a data latching/holding operation of each of registers in the pipeline processing unit 22, and an "operation selection control signal" instructing operation selection to arithmetic units such as adders in the pipeline processing unit 22. The control signals are supplied to each section of the complex vector operation processor 1. Also, the instruction control unit 16 supplies an address generating unit with information for the address generation.

When the vector operation corresponding to a first instruction ends, the instruction control unit 16 sends a read address to the instruction memory 14, reads the next instruction and carries out the control operation in the same way as in the first instruction. Thus, a plurality of complex vector operations are repeated. When the instruction read out from the instruction memory 14 is the stop instruction, the instruction control unit 16 stops a series of complex vector operations and notifies the operation end to the host apparatus (not shown). It is desirable that the complex vector operation end notice is an interrupt to a CPU of the host apparatus. It should be noted that the generation of various control signals by the instruction control unit 16 may be based on hardware logic circuit. Also, control data for each of the instructions may be previously stored as micro-codes and the various control signals may be generated based on the micro-codes and supplied as control signals.

The data input/output interface 12 outputs the read address supplied through the system bus to the data storage unit 20. In this way, the data input/output interface 12 outputs a complex vector calculation resultant data as the read data which is outputted from the data storage unit 20 based on the read address, onto the system bus.

The address generating unit 18 has a first address generating section 18-1, a second address generating section 18-2, and a the third address generating section 18-3. Each of the first address generating section 18-1, the second address generating section 18-2, and the third address generating section 18-3 generates an address in response to a control signal from the instruction control unit 16 and outputs the generated address to the data storage unit 20. A generation start address of each of the first address generating section 18-1, the second address generating section 18-2, and the third address generating section 18-3 is set by the instruction control unit 16, and an increment of the generated address is also set by the instruction control unit 16.

It should be noted that in a butterfly operation, each of the address generating sections generates an operation number in the butterfly operation stage. By converting the operation number, addresses for input complex vector data **A** and **B**, addresses for twiddle factor data, addresses for the calculation resultant data are generated, and supplied to the data storage unit 20. Also, in case of bit reverse transfer operation, addresses for the input data are further converted and supplied to the data storage unit 20 as addresses for bit reverse. These addresses conversions are possible to implement by a logic circuit because it is regular.

The timing of generation/output of each of addresses by the first address generating section 18-1, the second address generating section 18-2 and the third address generating section 18-3 is controlled in response to the control signal from the instruction control unit 16.

In this embodiment, the first address generating section 18-1, the second address generating section 18-2 and the third address generating section 18-3 are provided for the respective storage sections 20-1 to 20-4 of the data storage unit 20. The generated address is assigned to each storage section in the data storage unit 20. However, three address generating sections may be provided for the first data input bus 26-1, the second data input bus 26-2, and the data output bus 26-3, respectively.

The data storage unit 20 has a first storage section 20-1, a second storage section 20-2, a third storage section 20-3 at least. Each of the first storage section 20-1, the second storage section 20-2, and the third storage section is comprised of a bank RAM which is accessible independently.

Of the first storage section 20-1, the second storage section 20-2, and the third storage section 20-3, one is used for a vector register for operation data storage, another is used for a vector register for operation data read. The remaining one is used for a second vector register for operation data read, depending on an operation instruction.

Twiddle factor data which is used in butterfly operation for FFT/IFFT is constant complex vector data. Therefore, the twiddle factor data may be stored in a fourth data storage section 20-4 of a ROM. Also, when a collective operation is carried out based on a plurality of vector operation instructions, a data storage section may be added for temporary data storage/table data storage, if necessary. It should be noted that the description is given using the first storage section 20-1, the second storage section 20-2, and the third storage section 20-3, for the simple description.

The data storage unit 20 receives an address from each of the first address generating section 18-1, the second address generating section 18-2, and the third address generating section 18-3 in the address generating unit 18, or a write/read address from the data input/output interface 12 in response to the control signal from the instruction control unit 16. The data storage unit 20 supplies the received address to either of the first storage section 20-1, the second storage section 20-2, and the third storage section 20-3. A unique address is assigned to each of the data storage sections. When the assigned address is received, each of the data storage sections receives the address from each of the first address generating section 18-1, the second address generating section 18-2, and the third address generating section 18-3 or the write/read address from the data input/output interface 12 in accordance with predetermined priority, and carries out the operation of the output/storage of the data.

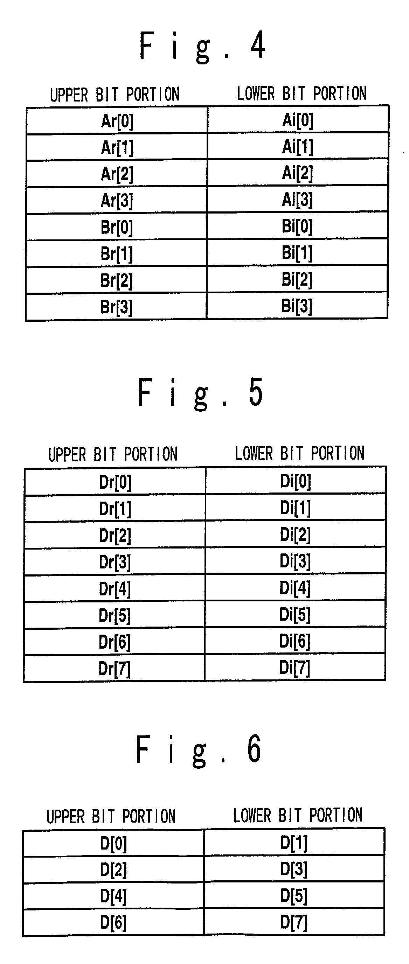

As shown in Fig. 4, each of the storage sections (20-1, 20-2, 20-3) stores a real part and an imaginary part of complex vector data in a same address when storing the complex vector data. The real part is stored in an upper bit portion and the imaginary part is stored in a lower bit portion. Especially, in the butterfly operation, as shown in Fig. 4, the first data storage section 20-1 stores a first complex vector data **A** group in a lower address space of the address space in order from the lowest address, and stores a second complex vector data **B** group in an upper address space in the address space in the order from the end of the first complex vector data **A** group. Also, the second data storage section 20-2 stores a first complex calculation resultant data **A** group and a second complex calculation resultant data **B** group in the same way as the first data storage section 20-1. The third data storage section 20-3 stores a complex vector data **W** group as coefficients called twiddle factor, as shown in Fig. 5. It should be noted that each of the first data storage section 20-1 and the second data storage section 20-2 is alternately switched between the operation data read and the operation result storage in accordance with the butterfly operation stage.

The data storage sections 20-1 to 20-3 may store real number data. In this case, the data storage sections 20-1 to 20-3 stores two real number data at the same address, as shown in Fig. 6.

The first storage section 20-1, the second storage section 20-2, and the third storage section 20-3 are connected with the data bus 26-1, the data bus 26-2, and the data bus 26-3. Each of the first storage section 20-1, the second storage section 20-2, and the third storage section 20-3 outputs stored data onto the data bus 26-1, the data bus 26-2 or a data bus to the data input/output interface 12, based on the address from either of the first address generating section 18-1, the second address generating section 18-2, the third address generating section 18-3, and the data input/output interface 12 in response to the control signal from the instruction control unit 16. Also, the first storage section 20-1, the second storage section 20-2, the third storage section 20-3 stores the data on the data bus 26-3, or the data from the data input/output interface 12 based on either of the address from the first address generating section 18-1, the second address generating section 18-2, the third address generating section 18-3, and the data input/output interface 12 in response to the control signal from the instruction control unit 16.

As mentioned above, in the butterfly operation, the first complex vector data **B** and the second complex vector data **A** are stored in the first storage section 20-1. The complex vector data **W** called the twiddle factor is stored at the third storage section 20-3. Also, the calculation resultant data in each process cycle of the butterfly operation is stored in the second storage section 20-2.

The pipeline processing unit 22 has a data input shift section 32, a pipeline operation section 34, and a data output section 36.

The data input shift section 32 as a data supply section is comprised of selector 52 (52-1, 52-2, 52-3, 52-4), registers 54-1 (54-1-1, 54-1-2, 54-1-3, 54-1-4), registers 54-2 (54-2-1, 54-2-2, 54-2-3, 54-2-4), registers 54-3 (54-3-1, 54-3-2, 54-3-3, 54-3-4), and registers 54-4 (54-4-1, 54-4-2, 54-4-3, 54-4-4). The register 54-1, the register 54-2, the register 54-3, and the register 54-4 forms shift registers.

The pipeline operation section 34 is comprised of selector 62 (62-1, 62-2, 62-3, 62-4), registers 63 (63-1, 63-2, 63-3, 63-4), two multipliers 64 (64-1 and 64-2) provided in parallel, registers 65 (65-1 and 65-2), adder 66, registers 67 (67-1, 67-2, 67-3), selectors 68 (68-1, 68-2, 68-3, 68-4), registers 69 (69-1, 69-2, 69-3, 69-4), two adders 70 (70-1, 70-2) provided in parallel, and registers 71 (71-1, 71-2).

In these structure, in case of the butterfly operation, the multipliers 64 (64-1, 64-2) provided in parallel, the adder 66, the adders 70 (70-1, 70-2) provided in parallel carry out the complex vector operation at the operation efficiency of 100%. Therefore, the butterfly operation can be carried out efficiently and at high speed.

The data output section 36 is comprised of registers 72 (72-1, 72-2, 72-3), selectors 73 (73-1, 73-2), and registers 74 (74-1, 74-2).

The instruction control unit 16 generates the timing control signals, the data selection control signals, the operation selection control signals and the operation enable signals. Each of the selectors in the pipeline processing unit 22 operates based on the operation enable signal. The selector selects data based on the data selection control signal. Also, the selector stops the operation when no operation enable signal is supplied. Each of the registers in the pipeline processing unit 22 operates based on the operation enable signal in response to the timing control signal. Also, the register continues to output the latched data when no operation enable signal is supplied. Each of the multipliers in the pipeline processing unit 22 operates based on the operation enable signal in response to the timing control signal. Each of the adders in the pipeline processing unit 22 operates based on the operation enable signal in response to the timing control signal. The adder carries out addition or subtraction based on the operation selection control signal.

Each of the selectors 52-1, 52-2, 52-3, and 52-4 is connected with the data bus 26-1 and the data bus 26-2. Each of the selector 52-1, the selector 52-2, the selector 52-3, and the selector 52-4 selects and outputs data in response to a data selection control signal from the instruction control unit 16.

The selector 52-1 selects one of data XL as the lower bit portion (an imaginary part) on the data bus 26-1 and data YL as the lower bit portion (an imaginary part) on the data bus 26-2 based on the data selection control signal from the instruction control unit 16 and outputs the selected data to the register 54-1. The selector 52-2 selects one of data XH as the upper bit portion (a real part) on the data bus 26-1 and data YH as the lower bit portion (a real part) on the data bus 26-2 based on the data selection control signal from the instruction control unit 16 and outputs the selected data to the register 54-2. The selector 52-3 selects one of the data XL as the lower bit portion (an imaginary part) on the data bus 26-1 and the data YL as the lower bit portion (an imaginary part) on the data bus 26-2 based on the data selection control signal from the instruction control unit 16 and outputs the selected data to the register 54-3. The selector 52-4 selects one of data XH as the upper bit portion (the real part) on the data bus 26-1 and the data YH as the upper bit portion (the real part) on the data bus 26-2 based on the selection control signal from the instruction control unit 16 and outputs the selected data to the register 54-1.

The register 54-1 is comprised of four registers of a register 54-1-1, a register 54-1-2, a register 54-1-3, and a register 54-1-4, which are connected in series. Each of the register 54-1-1, the register 54-1-2, the register 54-1-3, and the register 54-1-4 latches and outputs data supplied thereto in response to the timing control signal from the instruction control unit 16, when the operation enable signal is supplied. Also, when the timing control signal is not supplied from the instruction control unit 16, the register stops the operation and continues to output the latched data. The register restarts the operation when the timing control signal is supplied.

The register 54-1-1 latches the data outputted from the selector 52-1 in response to the timing control signal from the instruction control unit 16 and outputs the latched data to the register 54-1-2, the selector 62-1, and the selector 62-2 as the data XL1. The register 54-1-2 latches the data outputted from the register 54-1-1 in response to the timing control signal from the instruction control unit 16 and outputs the latched data to the register 54-1-3, and the selector 62-2 as the data XL2. The register 54-1-3 latches the data outputted from the register 54-1-2 in response to the timing control signal from the instruction control unit 16 and outputs the latched data to the register 54-1-4 as the data XL3. The register 54-1-4 latches the data outputted from the register 54-1-3 in response to the timing control signal from the instruction control unit 16 and outputs the latched data to the selector 68-2 and the selector 68-4 as the data XL4.

The register 54-2-1 latches the data outputted from the selector 52-2 in response to the timing control signal from the instruction control unit 16 and outputs the latched data to the register 54-2-2, the selector 62-3, and the selector 62-4 as the data XH1. The register 54-2-2 latches the data outputted from the register 54-2-1 in response to the timing control signal from the instruction control unit 16 and outputs the latched data to the register 54-2-3, and the selector 62-4 as the data XH2. The register 54-2-3 latches the data outputted from the register 54-2-2 in response to the timing control signal from the instruction control unit 16 and outputs the latched data to the register 54-2-4, the selector 68-2 and the selector 68-4 as the data XH3. The register 54-2-4 latches the data outputted from the register 54-2-3 in response to the timing control signal from the instruction control unit 16 and outputs the latched data to the selector 68-4 as the data XH4.

The register 54-3-1 latches the data outputted from the selector 52-3 in response to the timing control signal from the instruction control unit 16 and outputs the latched data to the register 54-3-2, the selector 62-1, and the selector 62-3 as the data YL1. The register 54-3-2 latches the data outputted from the register 54-3-1 in response to the timing control signal from the instruction control unit 16 and outputs the latched data to the register 54-3-3 as the data YL2. The register 54-3-3 latches the data outputted from the register 54-3-2 in response to the timing control signal from the instruction control unit 16 and outputs the latched data to the register 54-3-4 as the data YL3. The register 54-3-4 latches the data outputted from the register 54-3-3 in response to the timing control signal from the instruction control unit 16 and outputs the latched data to the selector 68-1 as the data YL4.

The register 54-4-1 latches the data outputted from the selector 52-4 in response to the timing control signal from the instruction control unit 16 and outputs the latched data to the register 54-4-2, the selector 62-1, and the selector 62-3 as the data YH1. The register 54-4-2 latches the data outputted from the register 54-4-1 in response to the timing control signal from the instruction control unit 16 and outputs the latched data to the register 54-4-3 as the data YH2. The register 54-4-3 latches the data outputted from the register 54-4-2 in response to the timing control signal from the instruction control unit 16 and outputs the latched data to the register 54-4-4 as the data YH3. The register 54-4-4 latches the data outputted from the register 54-4-3 in response to the timing control signal from the instruction control unit 16 and outputs the latched data to the selector 68-3 as the data YH4.

Each of the selector 62-1, the selector 62-2, the selector 62-3, and the selector 62-4 of the selector 62 selects and outputs data based on the data selection control signal from the instruction control unit 16.

The selector 62-1 selects one of the data XL1 from the register 54-1-1, the data YL1 from the register 54-3-1, and the data YH1 from the register 54-4-1 based on the data selection control signal from the instruction control unit 16 and outputs the selected data to the register 63-1. The selector 62-2 selects one of the data XL2 from the register 54-1-2, and the data XL1 from the register 54-1-1 based on the data selection control signal from the instruction control unit 16 and outputs the selected data to the register 63-2. The selector 62-3 selects one of the data XH1 from the register 54-2-1, the data YL1 from the register 54-3-1, the data YH1 from the register 54-4-1 based on the data selection control signal from the instruction control unit 16 and outputs the selected to the register 63-3. The selector 62-4 selects one of the data XH2 from the register 54-2-2, and the data XH1 from the register 54-2-1 based on the data selection control signal from the instruction control unit 16 and outputs the selected data to the register 63-4.

The register 63-1 and the register 63-2 latch the outputs of the selector 62-1 and the selector 62-2 in response to the timing control signal from the instruction control unit 16, respectively, and output the latched data to the multiplier 64-1 as data SEL2B and SEL2A. Also, the register 63-3 and the register 63-4 latch the outputs of the selector 62-3 and the selector 62-4 in response to the timing control signal from the instruction control unit 16 and output the latched data to the multiplier 64-2 as data SEL1B and SEL1A, respectively. Each of the register 63-1, the register 63-2, the register 63-3, and the register 63-4 stops the operation when the operation enable signal is not supplied from the instruction control unit 16 and continues to output the latched data. The register restarts the operation in response to the supply of the operation enable signal.

The multiplier 64-1 carries out multiplication of the data SEL2B and data SEL2A based on the operation enable signal in response to the operation enable signal from the instruction control unit 16 and outputs the multiplication resultant data to the register 65-1. The multiplier 64-2 carries out multiplication of data SEL1B and data SEL1A based on the operation enable signal from the instruction control unit 16 and outputs the multiplication resultant data to the register 65-2.

The register 65-1 latches the multiplication resultant data outputted from the multiplier 64-1 based on the operation enable signal in response to the timing control signal from the instruction control unit 16 and outputs the latched data to the adder 66 and the register 67-1 as data M2. Also, the register 65-2 latches the multiplication resultant data outputted from the multiplier 64-2 based on the operation enable signal in response to the timing control signal from the instruction control unit 16 and outputs the latched data to the adder 66 and the register 67-3 as data M1. The register 65-1 and the register 65-2 stops the operation when the operation enable signal is not supplied from the instruction control unit 16 and continues to output the latched data. The register restarts the operation in response to the supply of the operation enable signal.

The adder 66 carries out addition or subtraction between the data M1 and M2 based on the operation selection control signal. The adder 66 calculates the addition between the output M2 of the register 65-1 and the output M1 of the register 65-2 or subtraction between the output M2 and the output M1 based on the operation enable signal from the instruction control unit 16 and outputs the calculation resultant data to the register 67-2. In this way, whether the adder 66 should carry out the addition or the subtraction is controlled based on the instruction control unit 16 every time of the operation.

The register 67-2 latches the output of the adder 66 in response to the timing control signal when the operation enable signal is supplied from the instruction control unit 16, and outputs to the selector 68-1 and the selector 68-3 as data S1. The register 67-3 and the register 67-1 latch the multiplication result M1 outputted from the multiplier 64-2 and the multiplication result M2 outputted from the multiplier 64-1 in response to the timing control signal when the operation enable signals is supplied from the instruction control unit 16, and output the latched data as data M1D and data M2D to the selector 68-3 and the selector 68-1, respectively. The register 67-1 and the register 67-2 stops the operation when the operation enable signal is not supplied from the instruction control unit 16 and continues to output the latched data. The register restarts the operation in response to the supply of the operation enable signal.

The selector 68-1 selects one of the output YL4 of the register 54-3-4, the output S1 of the register 67-2, and the output M2D of the register 67-1 based on the data selection control signal from the instruction control unit 16 and outputs the selected data to the register 69-1. The selector 68-2 selects one of the output XH3 of the register 54-2-3, the output XL4 of the register 54-1-4, and a constant data of "0" based on the data selection control signal from the instruction control unit 16 and outputs the selected data to the register 69-2. The selector 68-3 selects one of the output YH4 of the register 54-4-4, the output S1 of the register 67-2, the output M1D of the register 67-3 based on the data selection control signal from the instruction control unit 16 and outputs the selected data to the register 69-3. The selector 68-4 selects one of the output XL4 of the register 54-1-4, the output XH4 of the register 54-2-4, the output XH3 of the register 54-2-3, and constant data of "0" based on a selection control signal from the instruction control unit 16 and outputs the selected data to the register 69-4.

The register 69-1 and the register 69-2 latch the output of the selector 68-1 and the output of the selector 68-2 in response to timing control signals from the instruction control unit 16, and output the latched data to the adder 70-1 as data SEL4B and data SEL4A, respectively. The register 69-3 and the register 69-4 latch the output of the selector 68-3 and the output of the selector 68-4 and output the latched data to the adder 70-2 as data SEL3B an data SEL3A, respectively. Each of the register 69-1, the register 69-2, the register 69-3, and the register 69-4 stops the operation in response to the supply stop of the operation enable signal from the instruction control unit 16 and continues to output the latched data. The register restarts the operation in response to the supply of the operation enable signal.

The adders 70-1 and 70-2 carry out addition or subtraction between the data from the register 69-1 and 69-2 or 69-3 or 69-4 based on the operation selection control signals. The adder 70-1 calculates addition or subtraction between the output SEL4B of the register 69-1 and the output of SEL4A of the register 69-2 based on the operation enable signal from the instruction control unit 16 and outputs the calculation resultant data to the register 71-1. The adder 70-2 calculates addition or subtraction between the output SEL3B of the register 69-3 and the output SEL3A of the register 69-4 based on the operation enable signal from the instruction control unit 16 and outputs the calculation resultant data to the register 71-2.

The register 71-1 latches the output data from the adder 70-1 based on the operation enable signal in response to the timing control signal from the instruction control unit 16 and outputs the latched data to the register 72-1 as data S3. Also, the register 71-2 latches the output data from the adder 70-2 based on the operation enable signal in response to the timing control signal from the instruction control unit 16 and outputs the latched data to the register 72-3 and the selector 73-1 as data S2. Each of the registers 71-1 and 71-2 stops the operation in response to the supply stop of the operation enable signal from the instruction control unit 16 and continues to output the latched data. The register restarts the operation in response to the supply of the operation enable signal.

The data output section is comprised of the registers 72-1, 72-2, 72-3, selectors 73-1 and 73-2 and registers 74-1 and 74-2.

The register 72-1 latches the outputted data S3 from the register 71-1 based on the operation enable signal in response to the timing control signal from the instruction control unit 16 and outputs the latched data to the selector 73-1 and the register 72-2 as data F3. The register 72-2 latches the output data F3 from the register 72-1 based on the operation enable signal in response to the timing control signal from the instruction control unit 16 and outputs the latched data to the selector 73-2 as data F1. The register 72-3 latches the output data S2 from the register 71-2 based on the operation enable signal in response to the timing control signal from the instruction control unit 16 and outputs the latched data to the selector 73-2 as data F2. Each of the register 72-1, the register 72-2, and the register 72-3 stops the operation in response to the supply stop of the operation enable signal from the instruction control unit 16 and continues to output the latched data. The register restarts the operation in response to the supply of the operation supply signal.

The selector 73-1 selects one of the output F3 of the register 72-1 and the outputs S2 of the register 71-2 in response to the data selection control signal from the instruction control unit 16, and outputs the selected data to the register 74-1. The selector 73-2 selects one of the output F1 of the register 72-2 and the outputs F2 of the register 72-3 in response to the data selection control signal from the instruction control unit 16, and outputs the selected data to the register 74-2.

The register 74-1 latches the output data from the selector 73-1 in response to the timing control signal when the operation enable signal is supplied from the instruction control unit 16 and outputs the latched data onto the data bus 26-3 as data WL. Also, the register 74-2 latches the output data from 73-2 in response to the timing control signal when the operation enable signal is supplied from the instruction control unit 16 and outputs the latched data onto the data bus 26-3 as data WH. When the calculation resultant data is complex data, the data WH and the data WL are a real part of the complex data and an imaginary part of the complex data, respectively. Each of the register 74-1 and the register 74-2 stops the operation in response to the supply stop of the operation enable signal from the instruction control unit 16 and continues to output the latched data. The register restarts the operation in response to the supply of the operation enable signal.

In this way, the complex data of the calculation result is stored in the data storage section of the data storage unit 20 through the data bus 26-3. At this time, a storage address is supplied to the data storage unit 20 from the address generating unit 18 and the complex data is stored in the address.

Next, the operation of the complex vector operation processor of the present invention will be described. In this example, the operation is described, taking a butterfly operation in fast Fourier transform (FFT) or inverse fast Fourier transform (IFFT) as an example.

In the calculation of FFT, the butterfly operation is carried out using the complex vector data $\mathbf{W}$ (m) (= $W_r(m)$ + $jW_i(m)$) called twiddle factor between the complex vector data group $\mathbf{A}$ (m) (= Ar(m) + $jA_i(m)$: $j^2$ = -1) and the complex vector data group $\mathbf{B}$ (m) (= $B_r(m)$ + $jB_i(m)$). When the calculation between the complex vector data groups $\mathbf{A}$(m) and $\mathbf{B}$(m) ends, the complex vector data groups $\mathbf{A}$(m+1) and $\mathbf{B}$(m+1) are obtained. After this, the next butterfly operation between the complex vector data groups A(m+1) and B(m+1) is carried out. In this way, the butterfly operation for the number of stages required is carried out in order. Here, the number of butterfly stages for FFT/IFFT is shown as $\log_2 N$ when the number of input data is N.

In the present invention, the butterfly operation is executed in pipeline processing. In this way, when the calculation result is obtained, the butterfly operation by the next stage is executed in the pipeline processing. In this case, when the processing moves from a stage to the next stage, the pipeline processing is not always continued from the first stage of the FFT/IFFT calculation to the last and a pipeline delay is generated. However, the complex vector data is huge generally, and even if there is a time period during which the pipeline processing is not carried out when the processing moves from a stage to the next stage, the pipeline delay is few and does not become a problem.

In the butterfly operation, an imaginary part ($B_i$) of first complex vector data $\mathbf{B}$ is selected by the selector 52-1 and latched by the register 54-1-1. Also, a real part ($B_r$) of the first complex vector data B is selected by the selector 52-2 and latched by the register 54-2-1. Also, at the same time as the imaginary part ($B_i$) and the real part ($B_r$) of the first complex vector data $\mathbf{B}$ are latched by the register 54-1-1 and the register 54-2-1, an imaginary part ($W_i$) and a real part ($W_r$) of third complex vector data $\mathbf{W}$ as twiddle factor data are selected by the selectors 52-3 and 52-4 and latched by the register 54-3-1 and the register 54-4-1, respectively.

Subsequently, in the next cycle, while the first complex vector data $\mathbf{B}$ and the third complex vector data $\mathbf{W}$ are shifted to the next registers in the next timing control signal, an imaginary part (Ai) of second complex vector data $\mathbf{A}$ is selected by the selector 52-1 and latched by the register 54-1-1, and a real part (Ar) thereof is selected by the selector 52-2 and latched by the register 54-2-1. Subsequently, at the same time as the imaginary part ($A_i$) and the real part ($A_r$) of the second complex vector data $\mathbf{A}$ are respectively latched by the register 54-1-1 and the register 54-2-1, the imaginary part ($W_i$) and real part ($W_r$) of the third complex vector data W are selected by the selectors 52-3 and 52-4 and latched again by the register 54-3-1 and the register 54-4-1.

In this way, the first complex vector data $\mathbf{B}$, the second complex vector data $\mathbf{A}$, and the third complex vector data $\mathbf{W}$, which are necessary for the butterfly operation, are supplied in 2 clock cycles. It should be noted that the third complex vector data $\mathbf{W}$ supplied in the above two clock cycles (i.e., at the timings that the first complex vector data $\mathbf{B}$ and the second complex vector data $\mathbf{A}$ are latched) are same. Next, the third complex vector data $\mathbf{W}$ supplied in next 2 clock cycles may be changed, according to need.

Also, the multiplication (Br*Wr and Bi*Wi, or Br*Wi and Bi*Wr) between the first complex vector data $\mathbf{B}$ and the third complex vector data $\mathbf{W}$ is carried out in one clock cycle using the two multipliers 64-1 and 64-2. The multiplication results are latched by the registers 65-1 and 65-2 as the data M2 and M1, respectively. The adder 66 carries out the calculation of addition and subtraction between the outputs of the multipliers 64-1 and 64-2 in two clock cycles. That is, the subtraction (BrWr - BiWi) and the addition (BrWi + BiWr) are carried out in two clock cycles.

The adders 70-1 and 70-2 calculate addition or subtraction operation, (Ar + (BrWr - BiWi)) and (Ar - (BrWr - BiWi)) between the above difference (BrWr - BiWi) and the first complex vector data $\mathbf{A}$(m) in one clock cycle. Moreover, the adders 70-1 and 70-2 calculate addition or subtraction operation, (Ai + (BrWi + BiWr)) and (Ai - (BrWi + BiWr)) between the above addition (BrWi + BiWr) and the first complex vector data $\mathbf{A}$(m) in the next clock cycle.

In this way, a set of the complex vector data necessary for the butterfly operation of the 2-cycle pipeline processing is provided. In this case, each arithmetic unit is used in units of 2 clock cycles to carry out the butterfly operation. That is, the operation efficiency is 100%. Also, because the butterfly operation for once can be carried out in the 2 clock cycles in the pipeline processing, the butterfly operation can be carried out at high speed.

The operation of the complex vector operation processor of the present invention will be described below in detail, taking the butterfly operation for the FFT or IFFT as an example. The complex vector data used for the butterfly operation are the first complex vector data $\mathbf{B}$ (= Br + jBi: Br is a real part and Bi is an imaginary part of B), the second complex vector data **A** (= Ar + jAi: Ar is a real part and Ai is an imaginary part of A), and the third complex vector data **W** called a twiddle factor (= Wr + jWi: Wr is a real part and Wi is an imaginary part). In the following description, only the butterfly operation of one set of complex vector data will be described but it could be understood that the other sets are processed in the pipeline in the same way.

The first storage section 20-1 of the data storage unit 20 has the first area to store the first complex vector data group **B** and the second area to store the second complex vector data group **A** as shown in Fig. 4. The data input/output interface 12 outputs the write address and the second complex vector data **A** supplied from the external to the data storage unit 20 in order. In this way, the second complex vector data group is stored in the second area of the first storage section 20-1. At this time, the real part Ar and imaginary part Ai of the second complex vector data **A** are stored in the same address.

Subsequently, the data input/output interface 12 outputs a write address and the first complex vector data group **B** to the data storage unit 20 in order. In this way, the first complex vector data group B is stored in the first area of the first storage section 20-1, like the second complex vector data **A**.

The first complex vector data **B** and the second complex vector data **A** are stored in the different area in the above-mentioned description. However, the first complex vector data and the second complex vector data may be alternately or dispersedly stored.

Next, the data input/output interface 12 outputs the write address and an instruction set supplied from the external to the instruction memory 14. The instruction memory 14 stores an instruction set according to the write address.

Next, a complex calculation start command is outputted to the instruction control unit 16 from the external. In response to the complex calculation start command, the instruction control unit 16 reads out a set of instructions from the instruction memory 14 in order one by one and carries out the read instructions. In this way, the complex calculation is started and first, the instruction control unit 16 carries out an initial setting process.

In the initial setting process, the instruction control unit 16 outputs various control data with a setup signal, and sets a head address, an address increment, and an operation mode and so on to the first address generating section 18-1, the second address generating section 18-2, and the third address generating section 18-3. At this time, in case of the butterfly operation, the first address generating section 18-1 is set to alternately generate a read address for the first complex vector data group B and the second complex vector data group A as Xadd for the butterfly operation. The second address generating section 18-2 is set to alternately generate a write address for the first complex vector data group B and the second complex vector data group A of the calculation result as Zadd. The third address generating section 18-3 is set to generate the read address for the third complex vector data group W as Yadd. At this time, the first storage section 20-1 and the third storage section 20-3 are used as the read operation and the second storage section 20-2 is used as the write operation. After the initial setting process, the instruction control unit 16 starts the operation.

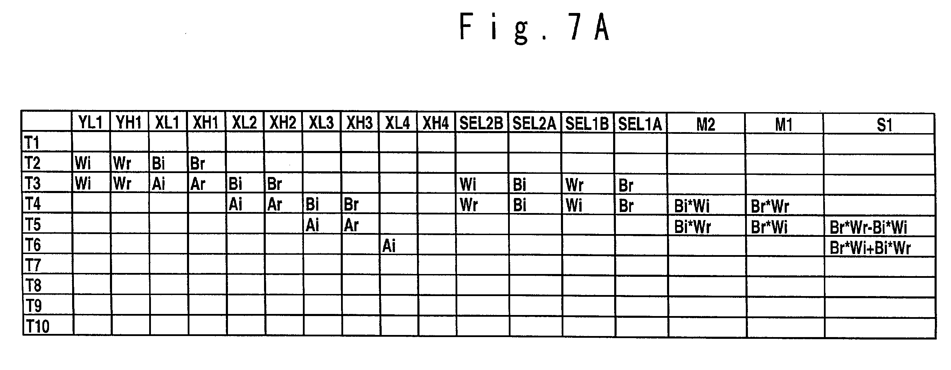

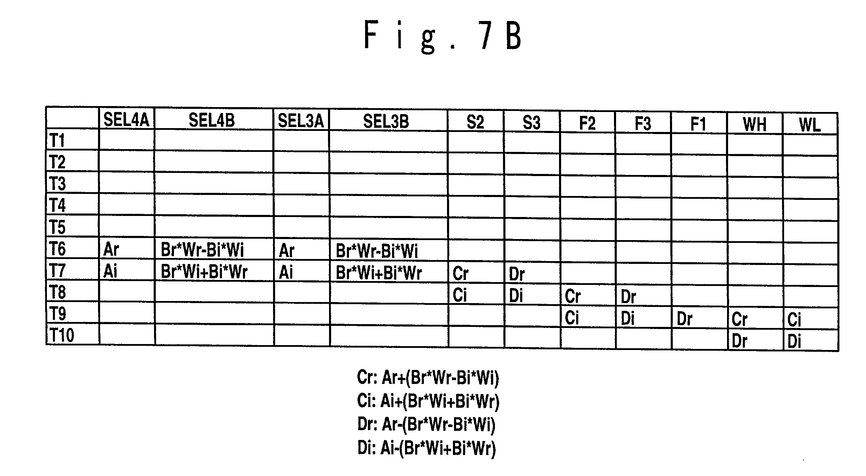

Figs. 7A and 7B are diagrams to show the operation of the complex vector operation processor of the present invention when the butterfly operation is carried out in the pipeline processing. These figures show the output of each register at each timing (T1-T10). Referring to these figures, the calculation operation until (Br*Wr-Bi*Wi) is obtained will be described.

The instruction control unit 16 generates a first timing control signal at a first timing T1. Here, the generation of the first timing control signal is carried out prior to the first timing T1, specifically, before one clock. The generation of the control signals at timings subsequent to the first timing T1 is similar to the first timing control signal. At the first timing T1, the first address generating section 18-1 and the third address generating section 18-3 of the address generating unit 18 generate read addresses Xadd and Yadd in response to the first timing control signal, and output them to the data storage unit 20.

Next, the instruction control unit 16 generates a second timing control signal. The data storage unit 20 supplies the read address Xadd outputted to the first storage section 20-1 at the first timing T1 and outputs the read address Yadd to the third storage section 20-3. At this time, the first storage section 20-1 of the data storage unit 20 outputs the first complex vector data **B** (= Br + iBi) onto the data bus 26-1 based on the read address Xadd. At the same time, the third storage section 20-3 outputs the third complex vector data **W** (= Wr + iWi) onto the data bus 26-2 based on the read address Yadd.

The selectors 52-1 and 52-2 are set to select the imaginary part and the real part of the complex vector data **B** on the data bus 26-1 based on the data selection control signal from the instruction control unit 16. Also, the selectors 52-3 and 52-4 are set to select the imaginary part and the real part of the complex vector data **W** on the data bus 26-2 based on the data selection control signal from the instruction control unit 16. Therefore, the selector 52-1 and the selector 52-2 output the imaginary part Bi and the real part Br of the first complex vector data **B** on the data bus 26-1 to the register 54-1-1 and the register 54-2-1. Also, at the same time, the selector 52-3 and the selector 52-4 output the imaginary part Wi and the real part Wr of the third complex vector data **W** on the data bus 26-2 to the register 54-3-1 and the register 54-4-1.

Each of the registers 54-1-1, 54-2-1, 54-3-1, 54-4-1 latches a corresponding one of the outputs of the selectors 52-1, 52-2, 52-3, 52-4 in response to the second timing control signal and outputs the latched data to the circuit of the subsequent stage of the pipeline circuit at the second timing T2. That is, the register 54-1-1 latches the imaginary part Bi of the first complex vector data **B** and outputs the latched data to the register 54-1-2, the selector 63-1, and the selector 63-2 as data XL1. The register 54-2-1 latches the real part Br of the first complex vector data **B** and outputs the latched data to the register 54-2-2, the selector 63-3, and the selector 63-4 as data XH1. The register 54-3-1 latches the real part Wi of the third complex vector data **W** and outputs the latched data to the register 54-3-2, the selector 63-1, and the selector 63-3 as data YL1. The register 54-4-1 latches the real part Wr of the third complex vector data **W** and outputs the latched data to the register 54-4-2, the selector 63-1, and the selector 63-3 as data YH1.

Next, the instruction control unit 16 generates a third timing control signal. Based on the data selection control signals, the selector 62-1 is set to select the data YL1, i.e., the imaginary part Wi of the third complex vector data **W**, and the selector 62-2 is set to select data XL1, i.e., the imaginary part Bi of the first complex vector data **B**. Also, the selector 62-3 is set to select data YH1, i.e., the real part Wr of the third complex vector data **W**, and the selector 62-4 is set to select data XH1, i.e., the real part Br of the first complex vector data **B**. Therefore, the selector 62-1 outputs the imaginary part Wi of the third complex vector data **W** to the register 63-1, and the selector 62-2 outputs the imaginary part Bi of the first complex vector data **B** to the register 63-2. Also, the selector 62-3 outputs the real part Wr of the third complex vector data **W** to the register 63-3 and the selector 62-4 outputs the real part Br of the first complex vector data **B** to the register 63-4.

The register 63-1 and the register 63-2 latch the imaginary part Wi of the third complex vector data **W** and the imaginary part Bi of the first complex vector data **B** outputted from the selector 62-1 and the selector 62-2, in response to the third timing control signal and output the latched data to the multiplier 64-1 as data SEL2B and SEL2A, respectively. Also, the register 63-3 and the register 63-4 latch the real part Wr of the third complex vector data **W** and the real part Br of the first complex vector data **B** outputted from the selector 62-3 and the selector 62-4, in response to the third timing control signal and outputs the latched data to the multiplier 64-2 as the data SEL1B and SEL1A, respectively.

Next, the instruction control unit 16 generates a fourth timing control signal. At the fourth timing T4, the multiplier 64-1 calculates a product (Bi*Wi) between the data SEL2B and the data SEL2A, i.e., between the data Wi and the data Bi and outputs multiplication resultant data to the register 65-1. Also, at the same time, the multiplier 64-2 calculates a product (Br*Wr) between the data SEL1B and the data SEL1A, i.e., between the data Wr and the data Br and outputs multiplication resultant data to the register 65-2. The register 65-1 and the register 65-2 latch the calculation resultant data (Bi*Wi and Br*Wr) of the multiplier 64-1 and multiplier 64-2 in response to the fourth timing control signal, respectively. The register 65-1 outputs the latched multiplication resultant data Bi*Wi to the adder 66 and the register 67-1 as the data M2, and the register 65-2 outputs the multiplication resultant data Br*Wr of the multiplier 64-2 to the adder 66 and the register 67-3 as the data M1.

Next, the instruction control unit 16 generates a fifth timing control signal. The adder 66 is set to carry out the subtraction (Br*Wr - Bi*Wi) to subtract the output of the register 65-1 from the output of the register 65-2 based on the operation selection control signal from the instruction control unit 16, and the adder 66 outputs the subtraction resultant data (Br*Wr - Bi*Wi) to the register 67-2. The register 67-2 latches the output (Br*Wr - Bi*Wi) of the adder 66 in response to the fifth timing control signal and outputs the latched data to the selectors 68-1 and 68-3 as the data S1.

While the above-mentioned operation is carried out, a reading operation of the second complex vector data **A** and the operation to get (Br*Wi + Bi*Wr) are carried out with the delay of one clock cycle. The first address generating section 18-1 of the address generating unit 18 updates the read address to an address to the second complex vector data group **A** in response to the second timing control signal and outputs the updated read address Xadd to the data storage unit 20 at the second timing T2. Also, the third address generating section 18-3 does not update the read address Yadd, and generates and outputs read address Yadd to the data storage unit 20 in response to the second timing control signal. The data storage unit 20 supplies the read address Xadd outputted at the second timing T2 to the first storage section 20-1 and outputs the read address Yadd to the third storage section 20-3. At this time, the first storage section 20-1 of the data storage unit 20 outputs the second complex vector data **A** (= Ar + iAi) onto the data bus 26-1 based on the updated read address Xadd. In the same way, the third storage section 20-3 outputs the third complex vector data **W** (= Wr + iWi) onto the data bus 26-2 based on the read address Yadd.

The selectors 52-1 and 52-2 output the imaginary part Ai and the real part Ar of the second complex vector data **A** on the data bus 26-1 to the register 54-1-1 and the register 54-2-1. Also, the selector 52-3 and the selector 52-4 output the imaginary part Wi and the real part Wr of the third complex vector data **W** on the data bus 26-2 to the register 54-3-1 and the selector 54-4-1.

The registers 54-1-1, 54-2-1, 54-3-1, 54-4-1 latch the output of the selectors 52-1, 52-2, 52-3, and 52-4 in response to the third timing control signal and output the latched data to the circuit of the subsequent stage at the third timing T3. That is, the register 54-1-1 latches the imaginary part Ai of the second complex vector data **A** and outputs the latched data to the register 54-1-2 and the selectors 63-1 and 63-2 as the data XL1. The register 54-2-1 latches the real part Ar of the second complex vector data **A** in response to the third timing control signal and outputs the latched data to the register 54-2-2 and the selectors 63-3, and 63-4 as the data XH1. The register 54-3-1 latches the real part Wi of the third complex vector data **W** in response to the third timing control signal and outputs the latched data to the register 54-3-2 and the selectors 63-1 and 63-3 as the data YL1. The register 54-4-1 latches the real part Wr of the third complex vector data and outputs the latched data to the register 54-4-2 and the selectors 63-1 and 63-3 as the data YH1.

Also, at this time, the register 54-1-2 latches the imaginary part Bi of the first complex vector data **B** outputted from the register 54-1-1 in response to the third timing control signal and outputs the latched data to the register 54-1-3 and the selector 63-2 as the data XL2. The register 54-2-2 latches the real part Br of the first complex vector data **B** outputted from the register 54-2-1 in response to the third timing control signal and outputs the latched data to the register 54-2-3 and the selector 62-4 as the data XH2.

Next, based on the data selection control signal, the selector 62-1 is set to select data YH1, i.e., the real part Wr of the third complex vector data **W**, and also the selector 62-2 is set to select data XL2, i.e., the imaginary part Bi of the first complex vector data **B**. The selector 62-3 is set to select data YL1, i.e., the imaginary part Wi of the third complex vector data **W**, and also the selector 62-4 is set to select data XH2, i.e., the real part Br of the first complex vector data **B**. In this way, the selectors 62-1, 62-2, 62-3, and 62-4 output Wr, Bi, Wi, Br to the registers 63-1, 63-2, 63-3, and 63-4, respectively.

Also, in response to the fourth timing control signal, the register 63-1 latches the real part Wr of the third complex vector data **W** selected by the selector 62-1 and outputs to the multiplier 64-1, and the register 63-2 latches the imaginary part Bi of the first complex vector data **B** selected by the selector 62-2 and outputs the latched data to the multiplier 64-1. Also, the register 63-3 latches the imaginary part Wi of the third complex vector data **W** selected by the selector 62-3 in response to the fourth timing control signal and outputs to the multiplier 64-2, and the register 63-4 latches the real part Br of the first complex vector data **B** selected by the selector 62-4 in response to the fourth timing control signal and outputs the latched data to the multiplier 64-2.

At fifth timing T5, the multiplier 64-1 calculates a product Bi*Wr between the real part Wr of the third complex vector data **W** and the imaginary part Bi of the first complex vector data **B** and outputs the calculation resultant data to the register 65-1. Also, at the same time, the multiplier 64-2 calculates a product Br*Wi between the imaginary part Wi of the third complex vector data **W** and the real part Br of the second complex vector data **B** and outputs the calculation resultant data to the register 65-2. The registers 65-1 and 65-2 latch the outputs Bi*Wr and Br*Wi of the multipliers 64-1 and 64-2 in response to the fifth timing control signal and output the latched data to the adder 66, respectively.

The adder 66 is set to carry out an addition based on the operation selection control signal. The adder 66 calculates the addition of the data Bi*Wr as the output M2 of the register 65-1 and the data Br*Wi as the output M1 of the register 65-2 and outputs the calculation resultant data (Br*Wi + Bi*Wr) to the register 67-2. The register 67-2 latches the calculation resultant data (Br*Wi + Bi*Wr) of the adder 66 in response to the sixth timing control signal and outputs the latched data to the selector 68-1 and the selector 68-3 as the data S1 at a sixth timing T6.

In this way, the subtraction resultant data (Br*Wr- Bi*Wi) is outputted from the register 67-2 at the fifth timing T5, and the addition resultant data (Br*Wi + Bi*Wr) is outputted at the sixth timing T6. Moreover, in parallel to the above-mentioned operation, the real part Ar and the imaginary part Ai of the second complex vector data **A** are shifted in the data input shift section 32. That is, at the fourth timing T4, the register 54-1-2 latches the imaginary part Ai of the second complex vector data **A** outputted from the register 54-1-1 and outputs the latched data to the register 54-1-3 and the selector 62-2 as the data XL2. Also, the register 54-2-2 latches the real part Ar of the second complex vector data **A** outputted from the register 54-2-1 and outputs the latched data to the register 54-2-3 as the data XH2. Moreover, at fifth timing T5, the register 54-1-3 and the register 54-2-3 latch the data Ai and Ar from the registers 54-1-2 and 54-2-2. The register 54-1-3 outputs the data Ai to the register 54-1-4. The register 54-2-3 outputs the data Ar to the register 54-2-4 and the selectors 68-2 and 68-4. At the sixth timing T6, the register 54-1-4 latches the imaginary part Ai of the second complex vector data **A** outputted from the register 54-1-3 and outputs the latched data to the selector 68-2 and the selector 68-4 as the data XL4. The data input shift section 32 shifts data and outputs the shifted data with a predetermined delay.

Next, the remaining operation of the butterfly operation and the storage of the calculation resultant data will be described.

The instruction control unit 16 generates a sixth timing control signal to the sixth timing T6. Based on the data selection control signal, the selector 68-1 is set to select the output S1 of the register 67-2, i.e., (Br*Wr - Bi*Wi) and also the selector 68-2 is set to select the output XH3 of the register 54-2-3, i.e., the data Ar. In the same way, the selector 68-3 is to select the output S1 of the register 67-2, i.e., (Br*Wr - Bi*Wi), the selector 68-4 is set to select the output XH3 of the register 54-2-3, i.e., the data Ar. Therefore, the selector 68-1 outputs (Br*Wr - Bi*Wi) to the register 69-1, and the selector 68-2 outputs the data Ar to the register 69-2. Also, the selector 68-3 outputs (Br*Wr - Bi*Wi) to the register 69-3, and the selector 68-4 selects and outputs the data Ar to the register 69-4.

The register 69-1 and the register 69-2 latches the output of data (Br*Wr - Bi*Wi) as the output of the selector 68-1 and the data Ar as the output of the selector 68-2 as the data SEL4B and SEL4A in response to the sixth timing control signal and output the latched data to the adder 70-1, respectively. Also, the register 69-3 and the register 69-4 latch the data (Br*Wr - Bi*Wi) as the output of the selector 68-3 and the data Ar as the output of the selector 68-4 in response to the sixth timing control signal as data SEL3B and SEL3A and output the latched data to the adder 70-2, respectively.

Next, the instruction control unit 16 generates a seventh timing control signal to a seventh timing T7. Based on the operation selection control signal, the adder 70-1 is set to subtract the output of the register 69-1 from the output of the register 69-2. Also, the adder 70-2 is set to add the output of the register 69-3 and the output of the register 69-4. Therefore, the adder 70-1 calculates and outputs subtraction Dr (= Ar - (Br*Wr - Bi*Wi)) to the register 71-1. The adder 70-2 calculates and outputs Cr (= Ar + (Br*Wr - Bi*Wi)) to the register 71-2. Subsequently, the registers 71-1 and 71-2 latch the outputs Dr and Cr of the adders 70-1 and 70-2 in response to the seventh timing control signal, respectively. The register 71-1 outputs the latched data Dr to the register 72-1 as the data S3, and the register 71-2 outputs the latched data Cr to the register 72-3 and the selector 73-1 as the data S2.

On the other hand, the selector 68-1 selects the output (Br*Wi + Bi*Wr) from the register 67-2 and outputs to the register 69-1. Also, the selector 68-2 selects data XL4 (=Ai) from the register 54-1-4 based on the data selection control signal and outputs the selected data to the register 69-2. The selector 68-3 selects the output (Br*Wi + Bi*Wr) from the register 67-2 and outputs the selected data to the register 69-3. Also, the selector 68-4 selects the data XL4 (=Ai) from the register 54-1-4 based on the selection control signal and outputs the selected data to the register 69-4. Subsequently, the registers 69-1 and 69-2 latch the outputs of the selectors 68-1 and 68-2, i.e., (Br*Wi + Bi*Wr) and Ai in response to the seventh timing control signal and output the latched data to the adder 70-1, respectively. Also, the registers 69-3 and 69-4 latch the outputs of the selectors 68-3 and 68-4, i.e., (Br*Wi + Bi*Wr) and Ai in response to the seventh timing control signal and output them the latched data to the adder 70-2, respectively.

Next, the instruction control unit 16 generates an eighth timing control signal to a eighth timing T8. At this time, based on the operation selection control signal, the adder 70-1 carries out the subtraction of the data (Br*Wi + Bi*Wr) from the data Ai and outputs calculation resultant data Di (= Ai - (Br*Wi + Bi*Wr)) to the register 71-1. The adder 70-2 carries out the addition of data (Br*Wi + Bi*Wr) and the data Ai and outputs the calculation resultant data Ci (= Ai + (Br*Wi + Bi*Wr)) to the register 71-2. Subsequently, the registers 71-1 and 71-2 latch the outputs Di and the Ci of the adders 70-1 and 70-2 in response to the eighth timing control signal, respectively. The register 71-1 outputs the latched data Di to the register 72-1 as the data S3, and the register 71-2 outputs the latched data Ci to the register 72-3 and the selector 73-1 as the data S2.

The data output section 36 carries out the operation to arrange an output timing of (Dr,Di) and (Cr,Ci) of a set in order to store the complex vector data A (= Cr + iCi) and B (= Dr + iDi) after the butterfly operation. The registers 72-1 and 72-3 latch the outputs Dr and Cr of the registers 71-1 and 71-2 in response to the eighth timing control signal, respectively. The register 72-1 outputs the latched data Dr to the selector 73-1 and the register 72-2 as data F3. Also, the register 72-3 outputs the latched data Cr to the selector 73-2 as data F2.

The instruction control unit 16 generates a ninth timing control signal to a ninth timing T9. The selector 73-1 selects the data Ci from the register 71-2 based on the data selection control signal and outputs to the register 74-1. Also, the selector 73-2 selects the data Cr from the register 72-3 based on the data selection control signal and outputs to the register 74-2. The register 74-1 latches the data Ci from the selector 73-1 in response to the ninth timing control signal and outputs the latched data onto the data bus 26-3 (the lower bit portion). Also, the register 74-2 latches the data Cr from the register 73-2 in response to the ninth timing control signal and outputs the latched data onto the data bus 26-3 (the upper bit portion).

On the other hand, the address generating section 18-2 generates and outputs a write address Zadd to the storage section 20 in response to the ninth timing control signal at the same time as the data Cr and Ci are outputted onto the data bus 26-3.

Next, the instruction control unit 16 generates a tenth timing control signal to a tenth timing T10. The storage section 20 supplies the write address Zadd from the address generating section 18-2 to the second storage section 20-2. The second storage section 20-2 stores the data Cr and Ci on the data bus 26-3 based on the write address Zadd in response to the tenth timing control signal (write enable signal from the instruction control unit 16).

On the other hand, the register 72-2 latches the data Dr from the register 72-1 in response to the ninth timing control signal and outputs the latched data to the selector 73-2. Also, the register 72-1 latches the data Di from the register 71-1 in response to the ninth timing control signal and outputs the latched data to the selector 73-1 and the register 72-2.

The selector 73-1 selects the data Di from the register 72-1 based on the data selection control signal and outputs to the register 74-1. Also, at the same time, the selector 73-2 selects the output Dr from the register 72-2 based on the data selection control signal and outputs to the register 74-2. Subsequently, the register 74-1 latches the data Di from the selector 73-1 in response to the tenth timing control signal and outputs the latched data onto the data bus 26-3 (the lower bit portion). Also, the register 74-2 latches the data Dr from the selector 73-2 in response to the tenth timing control signal and outputs the latched data on the data bus 26-3 (the upper bit portion).

On the other hand, the address generating section 18-2 updates and outputs the write address Zadd to the storage section 20 in response to the tenth timing control signal at the same time as the data Dr and Di are outputted onto the data bus 26-3.

Next, the instruction control unit 16 generates an eleventh timing control signal to a eleventh timing T11. The storage section 20 supplies the write address Zadd from the address generating section 18-2 to the second storage section 20-2. The second storage section 20-2 stores the data Dr and Di on the data bus 26-3 based on the write address Zadd in response to the eleventh timing control signal.

Through the above operation, the complex vector data **A** (= Cr + iCi) and **B** (= Dr + iDi) after the butterfly operation is stored in the second storage section 20-2 and the butterfly operation for one stage ends. The complex vector data thus obtained are used as the complex vector data for the next stage of the butterfly operation. The calculation of FFT/IFFT ends by carrying out the butterfly operation for the number of stages required. It should be noted that the data stored in the second storage section 20-2 after the last stage of the butterfly operation is not right in the address as the calculation resultant data of FFT/IFFT. Therefore, the calculation resultant data of FFT/IFFT after the last stage of the butterfly operation needs to be subject to a bit reverse operation to be described later.

Figs. 7A and 7B are diagrams showing the outputs of the respective registers in the pipeline processing unit 22 for every timing in case of the above-mentioned operation. As seen from the figures, the processing for the every butterfly operation is carried out in 2 clock cycles about each of components of the pipeline processing unit 22. Especially, all the arithmetic units (multipliers 64-1 and 64-2, and adders 66, 70-1, and 70-2) are used twice and the operation efficiency of the arithmetic units is made high to 100%.

Also, three kinds of buses, i.e., the two input buses 26-1 and 26-2 and the one output bus 26-3 are provided. Thus, the complex data (**A**, **B** and **W**) used for the butterfly operation can be inputted in two clock cycles, and also two kinds of the complex data (**C** and **D**) of the calculation resultant data can be outputted in two clock cycles. Therefore, there is no case that the input/output operations of the complex vector data become the bottleneck of the pipeline processing. The above-mentioned 2-cycle operation (one unit of the butterfly operation) can be continuously carried out without an empty clock cycle.

It should be noted that in the above-mentioned pipeline processing, 11 clock cycles are required from the first read of the complex vector data **B** to the output of the calculation resultant data of the complex vector data as the pipeline delay. However, because the numbers of complex vector data are many generally, the pipeline delay in the first portion and the last portion of the butterfly operation do not become any problem. Therefore, the butterfly operation for one stage can be carried out at high speed to the complex vector data group A and the complex vector data group B. At this time, the operation efficiency of the arithmetic units can be made to 100% except for the above-mentioned pipeline delay.

It should be noted that in the above-mentioned operation, the complex vector data **W** as a twiddle factor is identical to the complex vector data **A** and **B**. Therefore, the complex vector data **W** is read out with the complex vector data **B**, and latched by the register 54-3-1 and the register 54-4-1 and may be used for the butterfly operation for the complex vector data **A**.

Also, it could be understood that the numbers of pipeline stages and clock cycles in the pipeline processing of the above circuit structure may be increased appropriately in case that the memory access speed and the operation speed of the arithmetic units are slow and that components such as a normalization unit for a floating-point calculation need to be added.

In the above, the butterfly operation for FFT and IFFT is described. However, the complex vector operation processor of the present invention can be used for other operations of complex vector data. Below, cases where the complex vector operation processor of the present invention is used for various operations will be described. In this case, however, the description will be given, using the above pipeline processing as a reference for simplification of the description. Also, the data storage section and the address generating section used for the data input/output operations are supposed to be fixed.

1. Complex vector data transfer operation

**C = A**
That is,
Cr = Ar, Ci = Ai

In this complex vector operation, the operation enable signal is not supplied to the multipliers 64-1 and 64-2 and the adder 66. The selector 68-2 and the selector 68-4 are controlled by the instruction control unit 16 to select the input of "0". Also, the selector 68-1 and the selector 68-3 are controlled by the instruction control unit 16 to select the output of the register 54-3-4 and the output of the register 54-4-4, respectively.

The vector data **A** (= Ar + iAi) is read from the first storage section 20-1 and is selected by the selector 52-3 and the selector 52-4 through the data bus 26-2. After that, the selected data Ar and Ai are transferred from the register 54-3-1 and the register 54-4-1 to the register 54-3-4 and the register 54-4-4 through the registers 54-3-2 and 54-3-3 and the register 54-4-2 and 54-4-3 in response to the timing control signals and then supplied to the selector 68-1 and the selector 68-3, respectively. The register 69-1 and the register 69-3 latch the output Ai of the register 54-3-4 and the output Ar of the register 54-4-4 and supply to the adders 70-1 and 70-2. At the same time, the register 69-2 and the register 69-4 latch "0" and supply to the adders 70-1 and 70-2. The adders 70-1 and 70-2 carry out an addition calculation and output the calculation resultant data Ai and Ar to the data output section 36 through the register 71-1 and the register 71-2. Then, the data Ai is latched by the register 74-1 through the register 72-1 and the selector 73-1. Also, the data Ar is latched by the register 74-2 through the register 72-3 and the selector 73-2. In this way, the data Ai and Ar are stored in the second storage section 20-2 as the data Ci and Cr. Through the above operation, the transfer of the complex vector data **A** ends. As understood from the above description, the complex vector data transfer operation can be carried out by one clock cycle pipeline processing for every data.

2. Bit reverse transfer operation

C = A
That is,
Cr = Ar, Ci= Ai
In this operation, the complex vector data **A** (= Ar + iAi) is read out from the first storage section 20-1 in accordance with the address supplied from the first address generating section 18-1. The transfer operation of the read-out complex vector data **A** is same as the above "1. the complex vector data transfer operation". However, in this bit reverse operation, the second address generating section 18-2 generates an address obtained through bit reverse of the address supplied from the first address generating section 18-1 and supplies to the second storage section 20-2. Therefore, the data Ar and Ai on the data bus 26-3 are stored in the bit-reversed address of the second storage section 20-2 as the data Cr and Ci.

3. Complex vector data multiplication

$$C = A*B$$

$$= (Ar + iAi)* (Br + iBi)$$

$$\therefore Cr = (Ar*Br - Ai*Bi), Ci = (Ar*Bi + Ai*Br)$$

In this example, the complex vector data **A** is stored in the third storage section 20-3 instead of the twiddle factor **W** in the pipeline processing for the above butterfly operation. The complex vector data **B** is stored in the first storage section 20-1. The operation enable signal is not supplied to the registers 54-1-2 to 54-1-4, 54-2-2 to 54-2-4, 54-3-2 to 54-3-4, and 54-4-2 to 54-4-4, and the adder 70-1. While updating the address for every two clock cycles, the third address generating section 18-3 outputs a series of continuous updated addresses to the third storage section 20-3 in order for every clock cycle. Also, while updating an address for every two clock cycles, the first address generating section 18-1 outputs a series of continuous updated addresses to the first storage section 20-1 in order for every cycle. Also, while updating an address for every two clock cycles, the address generating section 18-2 outputs a series of continuous updated addresses to the second storage section 20-2 in order for every two clock cycles. With this, the data (Ar*Br - Ai*Bi) and (Ar*Bi + Ai*Br) are latched by the register 67-2 in order, like the above-mentioned butterfly operation.
The instruction control unit 16 outputs the operation selection control signal to the adder 70-2 such that the adder 70-2 carry out an addition operation. Also, the instruction control unit 16 outputs the data selection control signal to the selector 68-4 such that the selector 68-4 selects the constant data of "0". In this way, the data (Ar*Br - Ai*Bi) is latched by the register 71-2 in response to the seventh timing control signal, and the data (Ar*Bi + Ai*Br) is latched by the register 71-2 in response to the eighth timing control signal. Moreover, the data (Ar*Br- Ai*Bi) is outputted to the register 72-3 and latched by the register 72-3 in response to the eighth timing control signal. Moreover, the data (Ar*Br- Ai*Bi) is latched by the register 74-2 in the ninth timing control signal through the selector 73-2. Also, the data (Ar*Bi + Ai*Br) is latched by the register 71-2 in response to the eighth timing control signal, and then is latched by the register 74-1 in the ninth timing control signal through the selector 73-1. After that, the complex vector data C of the calculation resultant data is stored in the second storage section 20-2. In this way, the complex vector multiplication is carried out.

In the above description, only one of the two adders 70-1 and 70-2 is used. However, like the butterfly operation, the adder 70-2 may carry out the addition of the real part of the multiplication result and the constant data of 0 in place of Ar and the adder 70-1 may carry out the addition of the imaginary part of the multiplication result and the constant data of 0 in place of Ar. If the real part of the multiplication result is waited for one clock in the register 71-2 or the data output section 36, the real part and the imaginary part of the multiplication result can be outputted onto the output bus line at a same timing.

4. Complex vector conjugate multiplication

$$C = A*\mathtt{conj}\ (B)$$
$$= (Ar\ +\ iAi)*(Br\ -\ iBi)$$
$$= (ArBr\ +\ AiBi)\ +\ i(BrAi\ -\ ArBi)$$
$$\therefore\ \ Cr\ =\ ArBr\ +\ AiBi,\ Ci\ =\ BrAi\ -\ ArBi$$

where conj (**B**) is a complex conjugate of the complex vector **B**.

The complex vectors conjugate multiplication is similar to the above-mentioned complex vector multiplication. Only the sign is different. In the complex vector conjugate multiplication, the complex vector data **A** is stored in the third storage section 20-3 instead of twiddle factor **W** in the pipeline processing for the above butterfly operation. The complex vector data **B** is stored in the first storage section 20-1. While updating an address for every two clock cycles, third address generating section 18-3 outputs a series of continuous updated addresses to the third storage section 20-3 in order for every clock cycle. While updating an address for every two clock cycles, the first address generating section 18-1 outputs a series of continuous updated addresses to the first storage section 20-1 in order for every cycle. Also, while updating an address for every two clock cycles, the address generating section 18-2 outputs a series of continuous updated address to the second storage section 20-2 in order for every two clock cycles. However, the adder 66 is controlled by the instruction control unit 16 such that the adder 66 carries out an addition operation first and then carries out a subtraction operation at the next cycle of the first addition. Therefore, the data (Ar*Br + Ai*Bi) and (Br*Ai - Ar*Bi) are latched in order in the register 67-2.

The instruction control unit 16 outputs the operation selection control signal to the adder 70-2 such that the adder 70-2 carry out an addition operation. Also, the instruction control unit 16 outputs the data selection control signal to the selector 68-4 such that the selector 68-4 selects the constant data of "0". In this way, the data (Ar*Br - Ai*Bi) is latched by the register 71-2 in response to the seventh timing control signal, and the data (Ar*Bi + Ai*Br) is latched by the register 71-2 in response to the eighth timing control signal. Moreover, the data (Ar*Br - Ai*Bi) is outputted to the register 72-3 and latched by the register 72-3 in response to the eighth timing control signal. Moreover, the data (Ar*Br - Ai*Bi) is latched by the register 74-2 in the ninth timing control signal through the selector 73-2. Also, the data (Ar*Bi + Ai*Br) is latched by the register 71-2 in response to the eighth timing control signal, and then is latched by the register 74-1 in the ninth timing control signal through the selector 73-1. After that, the complex vector data C of the calculation resultant data is stored in the second storage section 20-2. In this way, the complex vector conjugate multiplication is carried out.

In the above description, only one of the two adders 70-1 and 70-2 is used. However, like the butterfly operation, the adder 70-2 may carry out the addition of the real part of the multiplication result and the constant data of 0 in place of Ar, and the adder 70-1 may carry out the addition of the imaginary part of the multiplication result and the constant data of 0 in place of Ar. If the real part of the multiplication result is waited for one clock in the register 71-2 or the data output section 36, the real part and the imaginary part of the multiplication result can be outputted onto the output bus line at a same timing.

5. Complex vector addition and subtraction operation

$$C \; = \; A \; \pm \; B$$

$$= \; (Ar \; + \; iAi) \pm \; (Br \; + \; iBi)$$

$$= \; (Ar \pm Br) \; + \; i(Ai \pm Bi)$$

In the complex vector addition and subtraction operation, the complex vector data **A** is stored in the third storage section 20-3 instead of twiddle factor **W** in the pipeline processing for the above butterfly operation. In the complex vector addition and subtraction operation, the instruction control unit 16 does not output the operation enable signal to the multipliers 64-1 and 64-2 and the adder 66. The instruction control unit 16 outputs the data selection control signals to the selectors 68-1, 68-2, 68-3, and 68-4. As a result, the selector 68-1 selects the output YL4 of the register 54-3-4 based on the data selection control signal, and the selector 68-2 selects the output XL4 of the register 54-1-4 based on the data selection control signal. Also, the selector 68-3 selects the output YH4 of the register 54-4-4 based on the data selection control signal, and the selector 68-4 selects the output XH4 of the register 54-2-4 based on the data selection control signal.

Also, the instruction control unit 16 outputs the operation selection control signals to the adders 70-1 and 70-2, depending on the addition or the subtraction. Moreover, the instruction control unit 16 outputs the operation enable signals the registers 54-1-1 to 54-1-4, 54-2-1 to 54-2-4, 54-3-1 to 54-3-4, and 54-4-1 to 54-4-4. Thus, the data is latched and shifted based on the operation enable signals in response to the timing control signals.

Also, like the above, the complex vector data **A** and **B** are stored in the first storage section 20-1 and the third storage section 20-3, respectively. The complex vector data **B** is stored in storage section 20-1. While updating an address for every clock cycle, the address generating section 18-3 outputs a series of continuous updated addresses to the third storage section 20-3 in order for every clock cycle. While updating an address for every clock cycle, the address generating section 18-1 outputs a series of continuous updated addresses to the first storage section 20-1 in order for every cycle. Also, while updating an address for every cycle, the address generating section 18-2 outputs a series of continuous updated addresses to the second storage section 20-2 in order for every cycle.

The complex vector data A and B are read from the storage sections 20-3 and 20-1, latched by the registers 54-1-1 to 54-4-1 and shifted from them in order. The data Ai is selected by the selector 68-1, and latched by the register 69-1. The data Bi is selected by the selector 68-2 and latched by the register 69-2. Also, the data Ar is selected by the selector 68-3, and latched by the register 69-3. Also, the data Br is selected by the selector 68-4 and latched by the register 69-4. In this way, the data (Ai $\pm$ Bi) and (Ar $\pm$ Br) are obtained as the outputs of the adders 70-1 and 70-2. The data (Ar $\pm$ Br) and (Ai $\pm$ Bi) are latched by the registers 71-2 and 71-1, latched by the registers 72-3 and 72-1 and then latched by the register 74-2 and 74-1 through the selectors 73-2 and 73-1. In this way, the calculation resultant data are stored in the second storage section 20-2 in order in accordance with the address from the second address generating section 18-2. In this way, the calculation resultant data can be obtained for every cycle in the complex vector addition and subtraction operation.

6. Complex vector square power

$$C = (Ar^2 + Ai^2)$$

The complex vector square power operation is similar to the above-mentioned complex vector multiplication operation. In the complex vector square power operation, the complex vector data **A** is stored in the first storage section 20-1 in the pipeline processing for the above butterfly operation. The instruction control unit 16 does not supply the operation enable signal to the registers 54-1-2 to 54-1-4, 54-2-2 to 54-2-4, 54-3-2 to 54-3-4, and 54-4-2 to 54-4-4, and the adder 70-1.

While updating an address for every cycle, the first address generating section 18-1 outputs a series of continuous updated addresses to the first storage section 20-1 in order for every clock cycle. Also, while updating an address for every clock cycle, the address generating section 18-2 outputs a series of continuous updated address to the second storage section 20-2 in order for every clock cycle. In this case, the instruction control unit 16 controls the selectors 62-1 and 62-2, to always select the output XL1 of the register 54-1-1, and the selectors 62-3 and 62-4 to always select the output XH1 of the register 54-2-1. Also, the instruction control unit 16 controls the adder 66 to carry out an addition operation. Therefore, the multiplier 64-1 calculates the data Ai*Ai and the multiplier 64-2 calculates the data Ar*Ar. The adder adds the Ar*Ar and the data Ai*Ai. The addition resultant data is latched by the register 67-2.

The instruction control unit 16 outputs the operation selection control signal to the adder 70-2 such that the adder 70-2 carries out an addition operation. Also, the instruction control unit 16 outputs the data selection control signals to the selector 68-4 such that the selector 68-4 selects the constant data of "0". In this way, the data (Ar*Ar + Ai*Ai) to the first complex data **A** is latched by the register 71-2. The data (Ar*Ar + Ai*Ai) to the second complex data **A** is latched by the register 71-2 in the next clock cycle. The register 71-2 outputs the latched data to the register 72-3 in the next timing, and the register 72-3 outputs the latched data to the register 74-2. After that, the power calculation resultant data is stored in the upper bit portion of the second storage section 20-2, as shown in Fig. 6. In this way, the complex vector square power calculation is carried out. The operation in this example is carried out in one clock cycle.

In the above description, only the adder 70-2 is used for one complex vector data. However, when two of the complex vector square power resultant data are stored in a same address, the first complex vector square power resultant data may be latched by the register 74-2 via the register 72-3 and the second complex vector square power resultant data may be latched by the register 74-1 from the register 71-2. Also, like the butterfly operation, the adder 70-2 may carry out the addition of the first complex vector square power resultant data and the constant data of 0 in place of Ar, and the adder 70-1 may carry out the addition of the second complex vector square power resultant data and the constant data of 0 in place of Ar. If the first complex vector square power resultant data is waited for one clock in the register 71-2 or the data output section 36, the first complex vector square power resultant data and the second complex vector square power resultant data can be outputted onto the output bus line at a same timing.

7. Real number (k) - complex vector multiplication

$$C = k*A$$

$$= k*(Ar + iAi)$$

$$= (k*Ar) + i(k*Ai)$$

The real number is stored in the third storage section 20-3 in the real number (k) - the complex vector multiplication. As shown in Fig. 6, the two real numbers are stored in one address. The complex vector data **A** is stored in the first storage section 20-1. The data Ar and Ai are read out from the first storage section 20-1 and latched by the register 54-1-1 and the register 54-2-1. Also, the two real numbers k1 and k2 are read out from the third storage section and latched by the registers 54-3-1 and 54-4-1. At first, the real number k1 is selected by the selectors 62-1 and 62-3. Also, the real part Ar of the complex vector data A is supplied to the selector 62-4. Also, the imaginary part Ai of the complex vector data **A** is supplied to the selector 62-2. In this way, in the first cycle, k1*Ai and k1*Ar are calculated by the multipliers 64-1 and 64-2. After that, without passing the adder 66, the calculation resultant data are supplied to the adders 70-1 and 70-2 through the registers 67-1 and 67-3. Because the data of "0" is supplied to the other inputs of the adders 70-1 and 70-2, the complex vector data to which the real number is multiplied is stored in the second storage section 20-2 through the data output shift section.

Next, in the second cycle, the complex vector data **A** is supplied to the selectors 62-2 and 62-4 from the registers 54-1-2 and 54-2-2. The selectors 62-1 and 62-3 select the real number k2 next. In this way, the complex vector data to which the real number is multiplied is obtained, like the case of the real number k1.

It should be noted that, in the second cycle, the data elements Ar and Ai of the complex vector data **A** may be updated by updating the address for the first storage section 20-1. In this case, the updated data elements Ar and Ai of the complex vector data **A** are supplied to the selectors 62-2 and 62-4 from the registers 54-1-1 and 54-2-1, like in the first cycle.

As understood from the above description, in the multiplication of the real number - the complex vector data, two calculation resultant data are obtained through two clock cycles. This is because the two real numbers are stored in the same address at the third storage section 20-3.

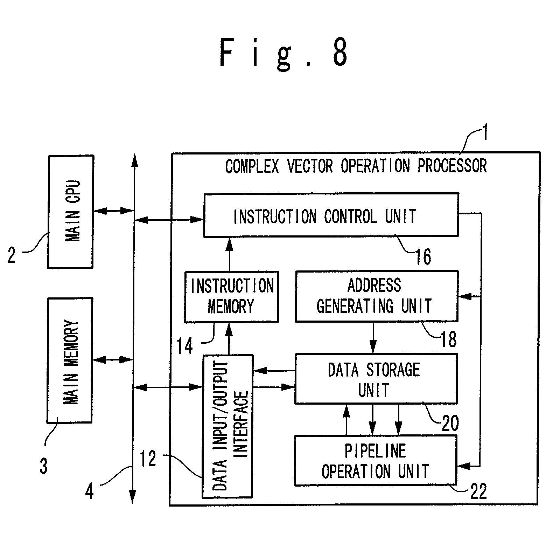

Next, an example in which the complex vector operation processor of the present invention is applied to a computer system will be described. Fig. 8 shows the circuit structure of the computer system which uses the complex vector operation processor according to the above embodiment of the present invention. Referring to Fig. 8, the computer system is comprised of the complex vector operation processor 1, a main CPU 2, and a main memory 3. The complex vector operation processor 1, the main CPU 2, and the main memory 3 are connected by a system bus 4.

The complex vector operation processor 1 has the data input/output interface 12, the instruction memory 14, the instruction control unit 16, address generating unit 18, the data storage unit 20, and the pipeline processing unit 22. These circuit structure and operation are as above-mentioned.

In the computer system of this embodiment, the complex vector operation processor of the present invention operates as a coprocessor connected with the main CPU 2.

Referring to Fig. 8, the operation of the computer system will be described using the above butterfly operation as an example.

The main CPU 2 reads the complex vector data groups A and B and a twiddle factor W from the main memory 3 and supplies them to the complex vector operation processor 1 through the system bus 4 with the write addresses. The data input/output interface 12 of the processor 1 outputs the write address and the complex vector data group A and B supplied through the system bus 4 to the data storage unit 20. In this way, the complex vector data groups A and B are stored in the first storage section 20-1 in the data storage unit 20 and the twiddle factor W is stored in the storage section 20-3. Also, the main CPU 2 reads out an instruction set from the main memory 3 and supplies it to the complex vector operation processor 1 through the system bus 4 with the write address. The data input/output interface 12 stores the instruction set in the instruction memory 14 in accordance with to the write address.

Next, the main CPU 2 outputs a calculation start command through the system bus 4 to the instruction control unit 16 of the complex vector operation processor 1. The instruction control unit 16 reads an instruction from the instruction memory 14 in response to the calculation start command and starts the control of the calculation.

After the calculation ends, the calculation resultant data are stored in the storage section 20-2. The instruction control unit 16 notifies the end of the operation to the main CPU 2. The main CPU 2 outputs the read address to the complex vector operation processor 1 through the system bus 4 in response to this operation end notice. The data input/output interface 12 outputs the read address to the data storage unit 20. The data input/output interface 12 reads out the calculation resultant data from the second storage section 20-2 of the data storage unit 20 and outputs to the main memory 3 through the system bus 4.

It should be noted that it could be understood that the data transfer may be carried out using a slave operation or a DMA transfer in the above-mentioned description.

Also, in this example, the single complex vector operation processor is arranged on the system bus 4 but a plurality of the complex vector operation processors may be arranged on the system bus 4 and the operations may be carried out in parallel.

Moreover, to indicate the operation end, an interrupt to the main CPU may be used apparently.

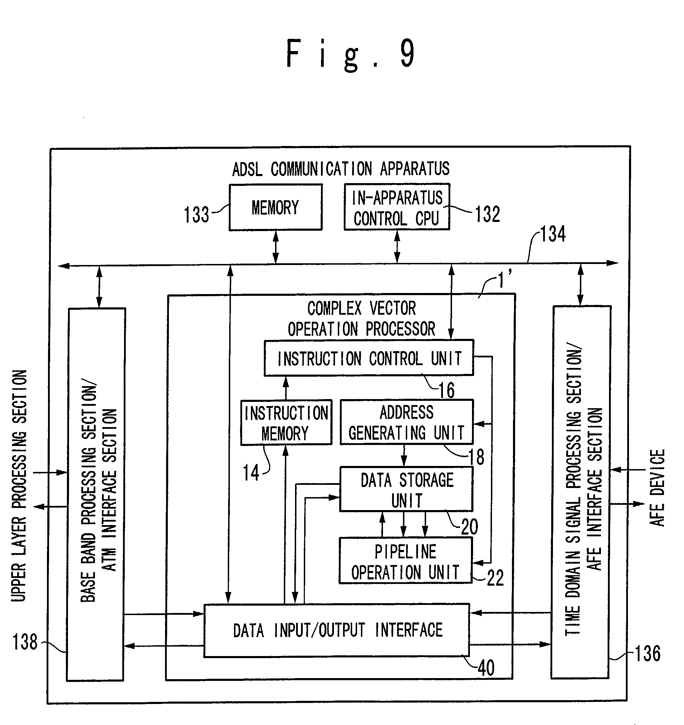

Next, an example in which the complex vector operation processor of the present invention is applied to an ADSL communication apparatus will be described with reference to Fig. 9.

The ADSL communication is a general term of a communication system which is represented by ITU-T recommendation G.992.1 (G. dmt).

FFT/IFFT is used as the basic technique of the digital modulation and demodulation in case of ADSL communication. To apply the complex vector operation processor of the present invention which can carry out the calculation of FFT/IFFT efficiently, to the ADSL communication apparatus is effective from the viewpoint of the improvement of the signal processing efficiency of the digital modulation and demodulation.

Also, in case of the ADSL communication, it is general to implement various types of frequency domain signal processing to be described later. In this case, most of the frequency domain signal processing is executable in the combination of the complex vector operations. Therefore, from the viewpoint of the reduction of arithmetic circuits, it is effective to apply the complex vector operation processor of the present invention to the ADSL communication apparatus.

Also, in the case of the ADSL communication, an accurate signal processing is required. Because the complex vector operation processor of the present invention may be structured using the floating-point arithmetic units, it is effective from the viewpoint of the improvement of the signal processing accuracy to apply the complex vector operation processor of the present invention to the ADSL communication apparatus.

Fig. 9 shows the circuit structure of the ADSL communication apparatus which uses the complex vector operation processor according to the embodiment of the present invention. Referring to Fig. 9, the ADSL communication apparatus is comprised of the complex vector operation processor 1, a control CPU 132, the main memory 133, a time domain signal processing section/AFE interface 136, and a baseband processing section/ATM interface section 138. The complex vector operation processor 1, the control CPU 132, the main memory 133, the time domain signal processing section/AFE interface 136, and the baseband processing section/ATM interface section 138 are connected by a system bus 134.

The complex vector operation processor 1 has a data input/output interface 40, the instruction memory 14, the instruction control unit 16, the address generating unit 18, the data storage unit 20, and the pipeline processing unit 22. The circuit structure other than the data input/output interface 40 and the operation are as above-mentioned.

An AFE (analog front end) apparatus is connected with the ADSL line, converts digital data outputted from the ADSL communication apparatus into analog data, and transmits onto an ADSL line. Also, the AFE apparatus converts analog data on the channel into digital data and receives it.

The time domain signal processing section/AFE interface section carries out addition of cyclic prefix, filtering (bandwidth limitation) and so on to the IFFT data outputted from the complex vector processor, and outputs them to the AFE apparatus. Also, the time domain signal processing section/AFE interface section receives the digital data from the AFE apparatus and carries out echo cancelling, filtering (bandwidth limitation), time domain equalization, removal of cyclic prefix and so on to the received digital data and outputs to the complex vector operation processor.

The baseband processing section/ATM interface section acquires ATM cells from an upper layer processing section (e.g., a ATM-SAR processor) through an ATM interface which is represented by an UTOPIA interface. After converting the ATM cells into ADSL frames, the baseband processing section/ATM interface section carries out Reed Solomon encoding, Trellis encoding, constellation encoding and so on to the ADSL frames and outputs constellation data to the complex vector processor (these processes are equivalent to the process just before the gain scaling of G. 992.1 ATU-C/R transmitter reference model for ATM transport). Also, the baseband processing section/ATM interface section carries out Viterbi decoding, constellation decoding, Reed Solomon decoding, conversion from the ADSL frames to the ATM cells and so on to constellation data outputted from the complex vector operation processor, and outputs the ATM cell to the upper layer processing section through the ATM interface (these processes are equivalent to the opposite conversion operation of the process just before the gain scaling of G.992.1 ATU-C/R transmitter reference model for ATM transport).

In the ADSL communication apparatus, the complex vector operation processor of the present invention operates as the frequency domain signal processing section in case of the ADSL communication.

An operation example of the complex vector operation processor as the frequency domain signal processing section in the Showtime phase of ADSL communication (G. dmt) will be shown below. It should be noted that the ADSL communication is roughly divided into phases of Activation and acknowledgement (G. hs) → Transceiver Training → Channel analysis → Showtime. Here, because the operation before Showtime is complicated, only a typical operation in Showtime will be shown as an application example to the ADSL communication of the complex vector operation processor of the present invention.

In the transmission process of ADSL communication, the complex vector operation processor acquires constellation data from the baseband processing section/ATM interface section, carries out frequency domain signal processing such as gain scaling and conversion from frequency domain data into time domain data (IFFT), and outputs the time domain data to the time domain signal processing section/AFE interface section. In the reception process, the complex vector operation processor acquires the time domain data from the time domain signal processing section/AFE interface section, carries out the frequency domain signal processing such as conversion from time domain data into frequency domain data (FFT), frequency domain equalization, and the gain scaling, outputs to the baseband processing section/ATM interface section as constellation data. Also, in case of the above-mentioned processes, the complex vector operation processor may carry out frequency domain signal processes such as error detection, frequency domain equalization coefficient update, square error calculation for SNR measurement. It should be noted that the above constellation data is the data when a signal in the frequency space coordinate system is represented as a complex number.

The relation between the frequency domain signal processing by the complex vector operation processor and the vector operations of the complex vector operation processor is shown below.

- Time domain → frequency domain data conversion (FFT), and frequency domain → time domain data conversion (IFFT): FFT and IFFT are implemented by the butterfly operation and the bit reverse transfer.
- Frequency domain equalization: $Y[i] = C[i]*X[i]$ is carried out to each vector data element using the complex vector multiplication, where X is input complex vector data, C is frequency domain equalization coefficient (complex vector data), Y is output complex vector data, and i is an index (hereinafter, the same is true) to each complex vector data element.
- The gain scaling: $Y[i] = k[i]*X[i]$ is carried out to each vector data element using the real number - complex vector multiplication, where X is input complex vector data, k is a scaling coefficient (real number vector data), and Y is output complex vector data.
- Error calculation: $E[i] = Ref[i] - X[i]$ is carried out to each vector data element using the complex vector addition and subtraction calculation, where X is input complex vector data, Ref is reference signal data (complex vector data), and E is error complex vector data.
- Update of frequency domain equalization coefficient: $Cupdate[i] = C[i] + u[i]*E[i]/X[i] = C[i] + u'[i]*E[i]*conj(X[i])$ is carried out each vector data element using the real number - complex vector multiplication, the complex vector conjugate multiplication, and the complex vector addition and subtraction calculation, where C is frequency domain equalization coefficient before update (complex vector data), Cupdate is frequency domain equalization coefficient after update (complex vector data), u is a step size (real number data), E is the above-mentioned error data (complex vector data), X is input complex vector data, u' is $u' = u[i]/ (|X[i]|^2)$, and conj (X) is complex conjugate of X.

· Square error calculation: $s = |E|^2 = Er^2 + Ei^2$ is carried out to each vector data element using the complex vector square power calculation, where $E = Er + iEi$, E is the above-mentioned error data (complex vector data), and s is a square error (real number vector data).

In the above-mentioned various frequency domain signal processes, a calculation quantity of each of the operations other than FFT/IFFT is proportional to the number of data N, whereas a calculation quantity of FFT/IFFT is proportional to $(N/2)\log_2 N$. For example, in case of N = 256, calculation is carried out 256 times in the complex vector multiplication, whereas calculation is carried out 1024 times in FFT/IFFT. In this way, because the calculation must be carried out a lot of times in FFT/IFFT, the complex vector operation processor of the present invention which can process FFT/IFFT calculation at high speed is suitable for the frequency domain signal process of the ADSL communication.

In the above, in case of execution of the operation of the complex vector operation processor, the control CPU 132 controls calculation start. If there is data which cannot be processed by the complex vector operation processor, the control CPU 132 carries out the control in such a way that the data are exchanged through the data input/output interface 40, and that only a part of calculation can be carried out.

Referring to Fig. 9, the operation of the ADSL communication apparatus will be described using the transmission processing and the reception processing in the above Showtime phase as an example. It should be noted that although a data storage section needs to be further added as a temporary storage in case of the following processing, it is omitted for simplification.

The control CPU 132 reads out an instruction set from the main memory 3 and supplies to the complex vector operation processor 1 through the system bus 134 with a write address. The data input/output interface 40 stores the instruction set in the instruction memory 14 in accordance with the write address.

The time domain signal processing section/AFE interface section 136 carries out an appropriate process to time domain reception data supplied from the AFE device to shape the reception data to the complex vector data for FFT calculation, and outputs them to the data input/output interface 40. The data input/output interface 40 generates a write address and outputs the complex vector data to the data storage unit 20 with the generated write data. In this way, the complex vector data is stored. When the storage of the complex vector data ends, the data input/output interface 40 informs the control CPU 132 about the completion of the storing of the complex vector data.

The control CPU 132 reads out the twiddle factors W from the main memory 133 in response to the notice and outputs the read-out data to the data input/output interface 40. The data input/output interface 40 of the complex vector operation processor 1 outputs the write address supplied through the system bus 134 and the twiddle factors W to the data storage unit 20. In this way, the complex vector data is stored in the storage section 20-1 in the data storage unit 20, and the twiddle factors W are stored in the storage section 20-3.

Next, the control CPU 132 outputs a calculation start command of the reception processing to the instruction control unit 16 of the complex vector operation processor 1 through the system bus 4. The instruction control unit 16 reads out the instruction set to the reception processing from the instruction memory 14 in response to the calculation starting instruction, and starts the control of the calculation.

After the calculation ends, the calculation resultant data is stored in the storage section 20-2. The instruction control unit 16 notifies calculation end to the control CPU 132. The control CPU 132 outputs a read command in response to this calculation end notice and a read address to the complex vector operation processor 1 through the system bus 134. The data input/output interface 40 outputs the read address to the data storage unit 20. The data input/output interface 40 inputs the calculation resultant data which are read out from the storage section 20-2 of the data storage unit 20 and outputs the inputted data to the baseband processing section/ATM interface section 138. After that, the calculation resultant data are appropriately processed and sent to the upper layer processing section as an ATM cell.

Also, the baseband processing section/ATM interface section 138 appropriately process the ATM cell supplied from the upper layer processing section and outputs constellation data, i.e., the complex vector data to the data input/output interface 40. The data input/output interface 40 generates a write address and outputs the complex vector data to the data storage unit 20 with the generated write address. In this way, the complex vector data is stored. When the storage of the complex vector data ends, the data input/output interface 40 informs the control CPU 132 about the completion of the storing of the complex vector data.

The control CPU 132 reads out the twiddle factors W from the main memory 133 in response to the notice and outputs the read-out data to the data input/output interface 40. The data input/output interface 40 of the complex vector operation processor 1 outputs the write address and the twiddle factor W supplied through the system bus 134

### EP 1 271 338 A2

to the data storage unit 20. In this way, the complex vector data are stored in the storage section 20-1 in the data storage unit 20 and the twiddle factor W are stored in the storage section 20-3.

Next, the control CPU 132 outputs the calculation start command of the transmission processing to the instruction control unit 16 of the complex vector operation processor 1 through the system bus 134. The instruction control unit 16 reads out an instruction set to the transmission processing from the instruction memory 14 in response to the calculation start command, and starts the control of the calculation.

After the calculation ends, the calculation resultant data are stored in the storage section 20-2. The instruction control unit 16 notifies calculation end to the control CPU 132. The control CPU 132 outputs a read command and a read address to the complex vector operation processor 1 through the system bus 134 in response to this calculation end notice. The data input/output interface 40 outputs the read address to the data storage unit 20. The data input/output interface 40 inputs the calculation resultant data which are read from the storage section 20-2 of the data storage unit 20 and outputs the read out data to the time domain signal processing section/AFE interface section 136. In this way, the calculation resultant data are appropriately processed and outputted to the AFE device as the time domain transmission data.

It should be noted that although the twiddle factor data **W** and an instruction set are stored each time in the above, they may be stored only once when the ADSL communication apparatus is initialized. Moreover, the twiddle factor data **W** may be stored in ROM as mentioned above.

As described above, according to the complex vector operation processor of the present invention, the complex vector operation can be carried out efficiently using as few elements as possible.

Also, the complex vector operation processor carries out the complex vector operation in pipeline processing. Therefore, the complex vector operation processor can carry out the complex vector operation at high speed. Also, the complex vector operation processor can substantively carries out the complex vector operation in few clock cycles, for example, two clock cycles. Therefore, the efficiency of the pipeline processing is high. Also, the bus structure suitable for the pipeline processing is provided in the complex vector operation processor of the present invention. Therefore, the pipeline processing with good efficiency is realized.

Also, according to the complex vector operation processor of the present invention, the other complex vector operations can be efficiently carried out in addition to the butterfly operation for FFT or IFFT.

Also, if the complex vector operation processor of the present invention is used in the computer system, the multifunction of the complex vector operation is feasible. Also, if the complex vector operation processor of the present invention is applied to the ADSL communication system, the communication efficiency can be improved.

### Claims

1. A complex vector operation processor for carrying out a complex vector operation, comprising:

first and second multiplier sections (62-1, 62-2, 63-1, 63-2, 64-1, 65-1, 62-3, 62-4, 63-3, 63-4, 64-2, 65-2) provided in parallel, wherein said first multiplier section calculates first product data of first data as one of a first group of data and second data as one of a second group of data, and said second multiplier section calculates second product data of third data as one of a third group of data and fourth data as one of a fourth group of data;

a first adder section (66, 67-2) operatively connected with outputs of said first and second multiplier sections to calculate first addition resultant data or first subtraction resultant data from said first and second products based on a first adder section control signal;

second and third adder sections (68-1, 68-2, 69-1, 69-2, 70-1, 71-1, 68-3, 68-4, 69-3, 69-4, 70-2, 71-2) operatively connected with output of said first adder section and arranged in parallel, wherein said second adder section calculates second addition resultant data or second subtraction resultant data from fifth data as one of a fifth group of data and sixth data as one of a sixth group of data based on a second adder section control signal, and said third adder section calculates third addition resultant data or third subtraction resultant data from seventh data as one of a seventh group of data and eighth data as one of an eighth group of data based on a third adder section control signal, wherein said first addition or subtraction data is contained in said fifth group of data and in said seventh group of data; and

a data output section (36) operatively connected with said second and third adder sections to produce complex operation resultant data from two of said second addition resultant data, said second subtraction resultant data, said third addition resultant data, and said third subtraction resultant data.

2. The complex vector operation processor according to claim 1, further comprising:

a bus group (26-1, 26-2, 26-3) comprising a plurality of input buses and an output bus, wherein said data output section outputs said complex operation resultant data on said output bus;

a storage section (20) which stores complex operation data as complex vector data or real number data to be subjected to said complex vector operation, outputs said complex operation data onto at least one of said plurality of input buses and inputs said complex operation resultant data from said output bus to store therein; and

a data supply section (32) which reads said complex operation data from said at least one input bus and supplies the read complex operation data to said first and second multiplier sections and said second and third adder sections.

3. The complex operation processor according to claim 2, wherein the number of said output buses is 2.

4. The complex vector operation processor according to claim 2 or 3, wherein said data supply section reads said complex operation data from said at least one input bus, and supplies each of a real part of said complex operation data and an imaginary part of said complex operation data as at least one of said first to fourth groups of data.

5. The complex vector operation processor according to claim 3, wherein said data supply section supplies each of said real part and said imaginary part of said complex operation data as at least one of said fifth to eighth groups of data with a predetermined delay time.

6. The complex vector operation processor according to any of claims 1 to 5, wherein said second adder section is operatively connected with the output of said first multiplier section, and said third adder section is operatively connected with the output of said second multiplier section, and

said fifth group of data contains said first product data, and said seventh group of data contains said second product data.

7. The complex vector operation processor according to any of claims 1 to 6, wherein said sixth group of data contains constant data of 0 and said eighth group of data contains constant data of 0.

8. The complex vector operation processor according to any of claims 1 to 7, wherein said data output section comprises:

a real part output section (74-2) which outputs a real part of said complex operation resultant data onto said output bus;

an imaginary part output section (74-1) which outputs an imaginary part of said complex operation resultant data onto said output bus;

a first latch section (72-1) connected to said second adder section to latch said second addition or subtraction resultant data;

a second latch section (72-3) connected to said third adder section to latch said third addition or subtraction resultant data;

a third latch section (72-2) connected to said first latch to latch an output of said first latch;

an output section first selector (73-1) connected with said first latch and said second latch to output one of the output of said first latch and an output of said second latch to said imaginary part output section as said imaginary part of said complex operation resultant data; and

an output section second selector (73-2) connected with said second latch and said third latch to output one of the output of said second latch and an output of said third latch to said real part output section as said real part of said complex operation resultant data.

9. The complex vector operation processor according to any of claims 1 to 8, wherein a butterfly operation of the complex vector operation is carried substantially out in pipeline processing of two clocks.

10. The complex vector operation processor according to any of claims 1 to 8, further comprising:

a control unit (16) which controls said first and second multiplier sections, and said first to third adder sections, and said data output section to carry out pipeline processing for said complex vector operation.

11. The complex vector operation processor according to claim 10, wherein said control unit controls said data supply section and said storage section in addition to said first and second multiplier sections, said first to third adder sections, and said data output section, to carry out said pipeline processing for said complex vector operation, when said complex vector operation processor includes said data supply section and said storage section.

12. The complex vector operation processor according to claim 10, wherein said control unit generates first to eighth selection signals, and

wherein said first multiplier section comprises first and second selectors (62-1, 62-2) and a first multiplier (64-1), wherein said first selector selects one of said first group of data as said first data in response to said first selection signal, and said second selector selects one of said second group of data as said second data in response to said second selection signal,

said second multiplier section comprises third and fourth selectors (62-3, 62-4) and a second multiplier (64-2), wherein said third selector selects one of said third group of data as said third data in response to said third selection signal, and said fourth selector selects one of said fourth group of data as said fourth data in response to said fourth selection signal,

said second adder section comprises fifth and sixth selectors (68-1, 68-2) and a second adder (70-1), wherein said fifth selector selects one of said fifth group of data as said fifth data in response to said fifth selection signal, and said sixth selector selects one of said sixth group of data as said sixth data in response to said sixth selection signal, and

said third adder section comprises seventh and eighth selectors (68-3, 68-4) and a third adder (70-2), wherein said seventh selector selects one of said seventh group of data as said seventh data in response to said seventh selection signal, and said eighth selector selects one of said eighth group of data as said eighth data in response to said eighth selection signal.

13. The complex vector operation processor according to claim 12, wherein said control unit further generates ninth and tenth selection signals,

when said data output section comprises said real part output section, said imaginary part output section, said first latch section, said second latch section, said third latch section, said output section first selector, and said output section second selector,

said output section first selector selects one of the output of said first latch and the output of said second latch as said imaginary part of said complex operation resultant data in response to said ninth selection signal, and

said output section second selector selects one of the output of said second latch and the output of said third latch as said real part of said complex operation resultant data in response to said tenth selection signal.

14. The complex vector operation processor according to any of claim 10 to 13, wherein said control unit generates timing control signals to said first and second multiplier sections, and said first to third adder sections such that said first and second multiplier sections operate at a same time at a first timing, said first adder section operates at a second timing after said first timing, said second and third adder sections operate at a third timing after said second timing, and said data output section outputs said complex operation resultant data a fourth timing after said third timing.

15. The complex vector operation processor according to any of claims 10 to 13, wherein said control unit instructs each of said first to third adder sections to calculate subtraction or addition.

16. The complex vector operation processor according to any of claims 10 to 15, further comprising:

an instruction memory (14) which stores an instruction set, and
said control unit controls said first and second multiplier sections, and said first to third adder sections based on said instruction set in response to a calculation start instruction.

17. The complex vector operation processor according to any of claim 10 to 16, wherein said instruction memory stores said instruction set for either one of a butterfly operation, a transfer operation, a bit reverse transfer operation, a complex vector multiplication operation, a complex vector conjugate multiplication operation, a complex addition or subtraction operation, a complex vector square power operation, and a real number - complex vector multiplication operation.

18. The complex vector operation processor according to claim 17, wherein the complex vector operation to be carried out is said butterfly operation of first and second complex vector data (**A**, **B**) using twiddle factor data as third complex vector data (**W**), and

said first multiplier section calculates multiplication of an imaginary part (Wi) of said third complex vector data (**W**) as said first data and an imaginary part (Bi) of said second complex vector data (**B**) as said second data in a first process of said pipeline processing to generate first process first product data (Bi*Wi), and calculates multiplication of a real part (Wr) of said third complex vector data (**W**) as said first data and said imaginary part (Bi) of said second complex vector data (**B**) as said second data in a second process of said pipeline processing to generate second process first product data (Bi*Wr),

said second multiplier section calculates multiplication of said real part (Wr) of said third complex vector data (**W**) as said third data and a real part (Br) of said second complex vector data (**B**) as said fourth data in said first process to generate first process second product data (Br*Wr), and calculates multiplication of the imaginary part (Wi) of said third complex vector data (**W**) as said third data and said real part (Br) of said second complex vector data (**B**) as said fourth data in said second process to generate second process second product data (Br*Wi),

said first adder section calculates subtraction of said first process first product data (Bi*Wi) from said first process second product data (Br*Wr) in said first process to produce first process first subtraction resultant data (Br*Wr - Bi*Wi), and calculates addition of said second process first product data (Bi*Wr) and said second process second product data (Br*Wi) in said second process to produce second process first addition resultant data (Bi*Wr + Br*Wi),

said second adder section calculates subtraction of said first process first subtraction resultant data (Br*Wr - Bi*Wi) as said fifth data from a real part (Ar) of said first complex vector data (**A**) as said sixth data in said first process to produce first process second subtraction resultant data (Ar - (Br*Wr - Bi*Wi)), and calculates subtraction of said second process first addition resultant data (Br*Wi + Bi*Wr) as said fifth data from an imaginary part (Ai) of said first complex vector data (**A**) as said sixth data in said second process to produce second process second subtraction resultant data (Ai - (Br*Wi + Bi*Wr)), and

said third adder section calculates addition of said first process first subtraction resultant data (Br*Wr - Bi*Wi) as said seventh data and said real part (Ar) of said first complex vector data (**A**) as said eighth data in said first process to produce first process third addition resultant data (Ar + (Br*Wr - Bi*Wi)), and calculate addition of said second process first addition resultant data (Br*Wi + Bi*Wr) as said seventh data and said imaginary part (Ai) of said first complex vector data (**A**) as said eighth data in said second process to produce second process third addition resultant data (Ai + (Br*Wi + Bi*Wr)).

**19.** The complex vector operation processor according to claim 17 or 18, wherein said instruction set is stored in said instruction memory for said transfer operation or said bit reverse transfer operation of said first complex vector data (**A**) which has a real part (Ar) and an imaginary part (Ai), and each of said sixth and eighth groups of data contains constant data of 0,

said second adder section calculates addition of said imaginary part (Ai) of said first complex vector data (**A**) as said fifth data and said constant data as said sixth data in a first process of said pipeline processing to produce first process second addition resultant data (Ai),

said third adder section calculates addition of said real part (Ai) of said first complex vector data (**A**) as said seventh data and said constant data as said eighth data in said first process to produce first process third addition resultant data (Ar), and

said first complex vector data (**A**) is stored at an address designated based on said instruction set.

**20.** The complex vector operation processor according to any of claim 17 to 19, wherein the complex vector operation to be carried out is said complex vector multiplication operation of first complex vector data (**A**) which has a real part (Ar) and an imaginary part (Ai) and second complex vector data (**B**) which has a real part (Br) and an imaginary part (Bi), and eighth groups of data contains constant data of 0, and

said first multiplier section calculates multiplication of said imaginary part (Ai) of said first complex vector data (**A**) as said second data and said imaginary part (Bi) of said second complex vector data (**B**) as said first data in a first process of said pipeline processing to generate first process first product data (Ai*Bi), and calculates multiplication of said real part (Br) of said second complex vector data (**B**) as said first data and said imaginary part (Ai) of said first complex vector data (**A**) as said second data in a second process of said pipeline processing to generate second process first product data (Ai*Br),

said second multiplier section calculates multiplication of said real part (Br) of said second complex vector data (**B**) as said third data and said real part (Ar) of said first complex vector data (**A**) as said fourth data in said first process to generate first process second product data (Ar*Br), and calculates multiplication of the imaginary part (Bi) of said second complex vector data (**B**) as said third data and said real part (Ar) of said first complex vector data (**A**) as said fourth data in said second process to generate second process second product data (Ar*Bi),

said first adder section calculates subtraction of said first process first product data (Ai*Bi) from said first process second product data (Ar*Br) in said first process to produce first process first subtraction resultant data (Ar*Br - Ai*Bi), and calculates addition of said second process first product data (Ai*Br) and said second process second product data (Ar*Bi) in said second process to produce second process first addition resultant data (Ai*Br + Ar*Bi), and

said third adder section calculates addition of said first process first subtraction resultant data (Ar*Br - Ai*Bi) as said seventh data and said constant data as said eighth data in said first process to produce first process third addition resultant data (Ar*Br - Ai*Bi), and calculate addition of said second process first addition resultant data (Ar*Bi + Ai*Br) as said seventh data and said constant data as said eighth data in said second process to produce second process third addition resultant data (Ar*Bi + Ai*Br).

21. The complex vector operation processor according to any of claim 17 to 20, wherein the operation to be carried out is said complex vector conjugate multiplication operation of first complex vector data (**A**) which has a real part (Ar) and an imaginary part (Ai) and second complex vector data (**B**) which is a complex conjugate of complex vector data and which has a real part (Br) and an imaginary part (Bi), and eighth groups of data contains constant data of 0, and

said first multiplier section calculates multiplication of said imaginary part (Ai) of said first complex vector data (**A**) as said second data and said imaginary part (Bi) of said second complex vector data (**B**) as said first data in a first process of said pipeline processing to generate first process first product data (Ai*Bi), and calculates multiplication of said real part (Br) of said second complex vector data (**B**) as said first data and said imaginary part (Ai) of said first complex vector data (**A**) as said second data in a second process of said pipeline processing to generate second process first product data (Ai*Br),

said second multiplier section calculates multiplication of said real part (Br) of said second complex vector data (**B**) as said third data and said real part (Ar) of said first complex vector data (**A**) as said fourth data in said first process to generate first process second product data (Ar*Br), and calculates multiplication of the imaginary part (Bi) of said second complex vector data (**B**) as said third data and said real part (Ar) of said first complex vector data (**A**) as said fourth data in said second process to generate second process second product data (Ar*Bi),

said first adder section calculates addition of said first process first product data (Ai*Bi) and said first process second product data (Ar*Br) in said first process to produce first process first addition resultant data (Ar*Br + Ai*Bi), and calculates subtraction of said second process second product data (Ar*Bi) from said second process first product data (Ai*Br) in said second process to produce second process first addition resultant data (Ai*Br - Ar*Bi), and

said third adder section calculates addition of said first process first subtraction resultant data (Ar*Br + Ai*Bi) as said seventh data and said constant data as said eighth data in said first process to produce first process third addition resultant data (Ar*Br + Ai*Bi), and calculate addition of said second process first subtraction resultant data (Ai*Br - Ar*Bi) as said seventh data and said constant data as said eighth data in said second process to produce second process third addition resultant data (Ai*Br - Ar*Bi).

22. The complex vector operation processor according to any of claims 17 to 21, wherein the complex vector operation to be carried out is said complex addition or subtraction operation between said first complex vector data (**A**) which has said real part (Ar) and said imaginary part (Ai), and said second complex vector data (**B**) which has said real part (Br) and said imaginary part (Bi), and

said second adder section calculates addition or subtraction between said imaginary part (Ai) of said first complex vector data (**A**) as said sixth data and said imaginary part (Bi) of said second complex vector data (**B**) as said fifth data in a first process of said pipeline processing to generate first process second addition or subtraction data (Ai ± Bi), and

said third adder section calculates addition or subtraction between said real part (Ar) of said first complex vector data (**A**) as said eighth data and said real part (Br) of said second complex vector data (**B**) as said seventh data in a first process of said pipeline processing to generate first process third addition or subtraction data (Ar ± Br).

23. The complex vector operation processor according to any of claims 17 to 22, wherein the complex vector operation to be carried out is said complex vector square power operation of said first complex vector data (**A**) which has a real part (Ar) and an imaginary part (Ai), and eighth groups of data contains constant data of 0, and

said first multiplier section calculates multiplication of said imaginary part (Ai) of said first complex vector data (**A**) as said second data and said imaginary part (Ai) of said first complex vector data (**A**) as said first data in a first process of said pipeline processing to generate first process first product data (Ai*Ai),

said second multiplier section calculates multiplication of said real part (Ar) of said first complex vector data (**A**) as said third data and said real part (Ar) of said first complex vector data (**A**) as said fourth data in said first process to generate first process second product data (Ar*Ar),

said first adder section calculates addition of said first process first product data (Ai*Ai) and said first process second product data (Ar*Ar) in said first process to produce first process first addition resultant data (Ar*Ar + Ai*Ai), and

said third adder section calculates addition of said first process first addition resultant data (Ar*Ar + Ai*Ai) as said seventh data and said constant data as said eighth data in said first process to produce first process third addition resultant data (Ar*Ar + Ai*Ai).

24. The complex vector operation processor according to any of claim 17 to 23, wherein the complex vector operation to be carried out is said real number - complex vector multiplication operation of first complex vector data (**A**) which has a real part (Ar) and an imaginary part (Ai), and a first real number (k1) and a second real number (k2), and said sixth and eighth groups of data contains constant data of 0, and

said first multiplier section calculates multiplication of said imaginary part (Ai) of said first complex vector data (**A**) as said second data and said first real number (k1) as said first data in a first process of said pipeline processing to generate first process first product data (k1*Ai), and calculates multiplication of said imaginary part (Ai) of said first complex vector data (**A**) as said second data and said second real number (k2) as said first data in a second process of said pipeline processing to generate second process first product data (k2*Ai),

said second multiplier section calculates multiplication of said real part (Ar) of said first complex vector data (**A**) as said fourth data and said first real number (k1) as said third data in said first process to generate first process second product data (k1*Ar), and calculates multiplication of said real part (Ar) of said first complex vector data (**A**) as said fourth data and said second real number (k2) as said third data in said second process to generate second process second product data (k2*Ar), and

said second adder section calculates addition of said first process first product data (k1*Ai) as said fifth data and said constant data as said sixth data in said first process to produce first process second addition resultant data (k1*Ai), and calculates addition of said second process first product data (K2*Ai) as said fifth data and said constant data as said eighth data in said second process to produce second process second addition resultant data (K2*Ai), and

said third adder section calculates addition of said first process second product data (k1*Ar) as said seventh data and said constant data as said eighth data in said first process to produce first process third addition resultant data (K1*Ar), and calculates addition of said second process second product data (k2*Ar) as said seventh data and said constant data as said eighth data in said second process to produce second process third addition resultant data (k2*Ar).

25. A computer system comprising:

said complex vector operation processor (1) according to any of claim 1 to 24,
a main memory (3) which stores complex vector data and instruction sets; and
a main CPU (2) which reads out one of said instruction sets from said main memory to supply to said complex vector operation processor.

26. The computer system according to claim 25, wherein said main CPU reads out said complex vector data from said main memory to supply to said complex vector operation processor.

27. An ADSL communication apparatus comprising:

said complex vector operation processor (1) according to any of claims 1 to 23,
a main memory (133) which stores instruction sets;
a first interface section (138) which supplies complex vector data to said complex vector operation processor;
a second interface section (13336) which supplies data corresponding to calculation resultant data from said complex vector operation processor; and
a main CPU (132) which reads out one of said instruction sets from said main memory to supply to said complex vector operation processor.

28. A method of complex vector operation, comprising the steps of:

(a) generating first to tenth selection signals, first to fifth operation control signals, and sequential timing signals based on an instruction set in response to an operation start signal;
(b) selecting as first data, one of a first group of data based on said first selection signal in response to each of said sequential timing signals by a first selector;
(c) selecting as second data, one of a second group of data based on said second selection signal in response to each of said sequential timing signals by a second selector;

(d) selecting as third data, one of a third group of data based on said third selection signal in response to each of said sequential timing signals by a third selector;

(e) selecting as fourth data, one of a fourth group of data based on said fourth selection signal in response to each of said sequential timing signals by a fourth selector;

(f) calculating multiplication of said first data and said second data based on said first operation control signal in response to each of said sequential timing signals by a first multiplier to produce first product data;

(g) calculating multiplication of said third data and said fourth data based on said second operation control signal in response to each of said sequential timing signals by a second multiplier to produce second product data;

(h) calculating addition or subtraction between said first product data and said second product data based on said third operation control signal in response to each of said sequential timing signals by a first adder to produce first addition or subtraction resultant data;

(i) selecting as fifth data, one of a fifth group of said first product data, said first addition or subtraction resultant data, and delayed twelfth data based on said fifth selection signal in response to each of said sequential timing signals by a fifth selector;

(j) selecting as sixth data, one of a sixth group of delayed tenth data, delayed previous ninth data and 0 data based on said sixth selection signal in response to each of said sequential timing signals by a sixth selector, said delayed previous ninth data being outputted earlier by one of said timing signals than delayed ninth data;

(k) selecting as seventh data, one of a seventh group of said second product data, said first addition or subtraction resultant data, and delayed eleventh data based on said seventh selection signal in response to each of said sequential timing signals by a seventh selector;

(l) selecting as eighth data, one of an eighth group of said delayed ninth data, said delayed previous ninth data and 0 data based on said eighth selection signal in response to each of said sequential timing signals by a eighth selector;

(m) calculating addition or subtraction between said fifth data and said sixth data based on said fourth operation control signal in response to each of said sequential timing signals by a second adder to produce second addition or subtraction resultant data;

(n) calculating addition or subtraction between said seventh data and said eighth data based on said fifth operation control signal in response to each of said sequential timing signals by a third adder to produce third addition or subtraction resultant data;

(o) selecting as an imaginary part of complex operation resultant data, one of a delayed one of said second addition or subtraction resultant data and said third addition or subtraction resultant data based on said ninth selection signal in response to each of said sequential timing signals by a ninth selector; and

(p) selecting as a real part of complex operation resultant data, one of a delayed one of said delayed second addition or subtraction resultant data as twice delayed second addition or subtraction resultant data and a delayed one of said third addition or subtraction resultant data based on said ninth selection signal in response to each of said sequential timing signals by a ninth selector.

**29.** The method according to claim 28, wherein:

said (b) to (e) selecting steps are carried out in response to a first timing signal of said timing signals,
said (m) and (n) calculating steps are carried out in response to a fifth timing signal next to said fourth timing signal of said timing signals, and
said (o) to (p) selecting steps are carried out in response to a sixth timing signal after said fifth timing signal of said timing signals.

**30.** The method according to claim 28, wherein a complex vector operation to be carried out is a butterfly operation of first and second complex vector data (**A, B**) using twiddle factor data as third complex vector data (**W**), and said (b) selecting step comprises the step of:

selecting an imaginary part (Wi) of said third complex vector data (**W**) as said first data in response to a first timing signal of said timing signals, and a real part (Wr) of said third complex vector data (**W**) as said first data in response to a second timing signal of said timing signals,

said (c) selecting step comprises the step of:

selecting an imaginary part (Bi) of said second complex vector data (**B**) as said second data in response to said first timing signal, and said imaginary part (Bi) of said second complex vector data (**B**) as said second data in response to said second timing signal,

said (f) calculating step comprises the step of:

multiplying said imaginary part (Wi) of said third complex vector data (**W**) and said imaginary part (Bi) of said second complex vector data (**B**) in response to said second timing signal to generate first process first product data (Bi*Wi), and multiplying said real part (Wr) of said third complex vector data (**W**) and said imaginary part (Bi) of said second complex vector data (**B**) in response to a third timing signal of said timing signals to generate second process first product data (Bi*Wr),

said (d) selecting step comprises the step of:

selecting said real part (Wr) of said third complex vector data (**W**) as said third data in response to said first timing signal and selecting said imaginary part (Wi) of said third complex vector data (**W**) as said third data in response to said second timing signal,

said (e) selecting step comprises the step of:

selecting a real part (Br) of said second complex vector data (**B**) as said fourth data in response to said first timing signal and selecting said real part (Br) of said second complex vector data (**B**) as said fourth data in response to said second timing signal,

said (g) calculating step comprises the step of:

multiplying said real part (Wr) of said third complex vector data (**W**) and said real part (Br) of said second complex vector data (**B**) in response to said second timing signal to generate first process second product data (Br*Wr), and multiplying said imaginary part (Wi) of said third complex vector data (**W**) and said real part (Br) of said second complex vector data (**B**) in response to said third timing signal to generate second process second product data (Br*Wi),

said (h) calculating step comprises the step of:

subtracting said first process first product data (Bi*Wi) from said first process second product data (Br*Wr) in response to said third timing signal to produce first process first subtraction resultant data (Br*Wr - Bi*Wi), and adding said second process first product data (Bi*Wr) and said second process second product data (Br*Wi) in response to a fourth timing signal of said timing signals to produce second process first addition resultant data (Bi*Wr + Br*Wi),

said (i) selecting step comprises the step of:

selecting said first process first subtraction resultant data (Br*Wr - Bi*Wi) as said fifth data in response to said fourth timing signal and said second process first addition resultant data (Br*Wi + Bi*Wr) as said fifth data in response to a fifth timing signal of said timing signals,

said (j) selecting step comprises the step of:

selecting a real part (Ar) of said first complex vector data (**A**) as said sixth data in response to said fourth timing signal, and an imaginary part (Ai) of said first complex vector data (**A**) as said sixth data in response to said fifth timing signal,

said (m) calculating step comprises the step of:

subtracting said first process first subtraction resultant data (Br*Wr - Bi*Wi) from said real part (Ar) of said first complex vector data (**A**) in response to said fifth timing signal to produce first process second subtraction resultant data (Ar - (Br*Wr - Bi*Wi)), and subtracting said second process first addition resultant data (Br*Wi + Bi*Wr) from said imaginary part (Ai) of said first complex vector data (**A**) in response to a sixth timing signal of said timing signals to produce second process second subtraction resultant data (Ai - (Br*Wi + Bi*Wr)),

said (k) selecting step comprises the step of:

selecting said first process first subtraction resultant data (Br*Wr - Bi*Wi) as said seventh data in response to said fourth timing signal, and selecting said second process first addition resultant data (Br*Wi + Bi*Wr) as said seventh data in response to said fifth timing signal,

said (l) selecting step comprises the step of:

selecting said real part (Ar) of said first complex vector data (**A**) as said eighth data in response to said fourth timing signal, and selecting said imaginary part (Ai) of said first complex vector data (**A**) as said eighth data in response to said fifth timing signal,

said (n) calculating step comprises the step of:

adding said first process first subtraction resultant data (Br*Wr - Bi*Wi) and said real part (Ar) of said first complex vector data (**A**) in response to said fifth timing signal to produce first process third addition resultant data (Ar + (Br*Wr - Bi*Wi)), and adding said second process first addition resultant data (Br*Wi + Bi*Wr) and said imaginary part (Ai) of said first complex vector data (**A**) in response to a sixth timing signal of said timing signals to produce second process third addition resultant data (Ai + (Br*Wi + Bi*Wr)),

said (o) selecting step comprises the step of:

selecting said second process second subtraction resultant data (Ai - (Br*Wi + Bi*Wr)) in response to a seventh timing signal of said timing signals, and second process third addition resultant data (Ai + (Br*Wi + Bi*Wr)) which is held in response to said seventh timing signal, in response to an eighth timing signal of said timing signals,

said (p) selecting step comprises the step of:

selecting said first process third addition resultant data (Ar + (Br*Wr - Bi*Wi)), which is held in response to said seventh timing signal, in response to said eighth timing signal, and said first process second subtraction resultant data (Ar - (Br*Wr - Bi*Wi)), which is held in response to said sixth timing signal and said seventh timing signal, in response to said eighth timing signal.

31. The method according to claim 30, wherein said instruction set is stored in said instruction memory for said transfer operation or said bit reverse transfer operation of said first complex vector data (**A**) which has said real part (Ar) and said imaginary part (Ai),
said (i) selecting step comprises the step of:

selecting said imaginary part (Ai) of said first complex vector data (**A**) as said fifth data in response to said fourth timing signal,

said (j) selecting step comprises the step of:

selecting 0 in response to said fourth timing signal in response to said fourth timing signal,

said (m) calculating step comprises the step of:

adding said imaginary part (Ai) of said first complex vector data (**A**) and 0 in response to said fifth timing signal to produce first process second addition resultant data (Ai),

said (k) selecting step comprises the step of:

selecting said real part (Ar) of said first complex vector data (**A**) as said seventh data in response to said fourth timing signal,

said (l) selecting step comprises the step of:

selecting 0 in response to said fourth timing signal in response to said fourth timing signal,

said (n) calculating step comprises the step of:

adding said real part (Ar) of said first complex vector data (**A**) and 0 in response to said fifth timing signal to produce first process third addition resultant data (Ar),

said (o) selecting step comprises the step of:

selecting said first process second addition resultant data (Ai), which is held in response to said sixth timing signal, in response to said seventh timing signal, and

said (p) selecting step comprises the step of:

selecting said first process third addition resultant data (Ar), which is held in response to said sixth timing signal, in response to said seventh timing signal.

**32.** The method according to claim 30 or 31, wherein the complex vector operation to be carried out is said complex vector multiplication operation of said first complex vector data (**A**) and said second complex vector data (**B**), and said (b) selecting step comprises the step of:

selecting said imaginary part (Bi) of said second complex vector data (**B**) as said first data in response to said first timing signal, and said real part (Br) of said third complex vector data (**B**) as said first data in response to a second timing signal of said timing signals,

said (c) selecting step comprises the step of:

selecting an imaginary part (Ai) of said first complex vector data (**A**) as said second data in response to said first timing signal, and in response to said second timing signal,

said (f) calculating step comprises the step of:

multiplying said imaginary part (Bi) of said second complex vector data (**B**) and said imaginary part (Ai) of said first complex vector data (**A**) in response to said second timing signal to generate first process first product data (Ai*Bi), and multiplying said real part (Br) of said second complex vector data (**B**) and said imaginary part (Ai) of said first complex vector data (**A**) in response to said third timing signal to generate second process first product data (Ai*Br),

said (d) selecting step comprises the step of:

selecting said real part (Br) of said second complex vector data (**B**) as said second data in response to said first timing signal and selecting said imaginary part (Bi) of said second complex vector data (**B**) as said third data in response to said second timing signal,

said (e) selecting step comprises the step of:

selecting said real part (Ar) of said first complex vector data (**A**) as said fourth data in response to said first timing signal and in response to said second timing signal,

said (g) calculating step comprises the step of:

multiplying said real part (Br) of said second complex vector data (**B**) and said real part (Ar) of said first complex vector data (**A**) in response to said second timing signal to generate first process second product data (Ar*Br), and multiplying said imaginary part (Bi) of said second complex vector data (**B**) and said real part (Ar) of said first complex vector data (**A**) in response to said third timing signal to generate second process second product data (Ar*Bi),

said (h) calculating step comprises the step of:

subtracting said first process first product data (Ai*Bi) from said first process second product data (Ar*Br) in response to said third timing signal to produce first process first subtraction resultant data (Ar*Br - Ai*Bi), and adding said second process first product data (Ai*Br) and said second process second product data (Ar*Bi) in response to said fourth timing signal to produce second process first addition resultant data (Ai*Br + Ar*Bi),

said (k) selecting step comprises the step of:

selecting said first process first subtraction resultant data (Ar*Br - Ai*Bi) as said seventh data in response to said fourth timing signal, and selecting said second process first addition resultant data (Ar*Bi + Ai*Br) as said seventh data in response to said fifth timing signal,

said (l) selecting step comprises the step of:

selecting 0 in response to said fourth timing signal, and in response to said fifth timing signal,

said (n) calculating step comprises the step of:

adding said first process first subtraction resultant data (Ar*Br - Ai*Bi) and said 0 in response to said fifth timing signal to produce first process third addition resultant data (Ar*Br - Ai*Bi), and adding said second process first addition resultant data (Ar*Bi + Ai*Br) and said 0 in response to said sixth timing signal to produce second process third addition resultant data (Ar*Bi + Ai*Br),

said (o) selecting step comprises the step of:

selecting said second process second subtraction resultant data (Ar*Bi + Ai*Br) in response to said seventh timing signal, and

said (p) selecting step comprises the step of:

selecting said first process third addition resultant data (Ar*Br - Ai*Bi), which is held in response to said sixth timing signal, in response to said seventh timing signal.

33. The method according to any of claim 30 to 32, wherein the operation to be carried out is said complex vector conjugate multiplication operation of said first complex vector data (**A**) and said second complex vector data (**B**) which is a complex conjugate of complex vector data, and
said (b) selecting step comprises the step of:

selecting said imaginary part (Bi) of said second complex vector data (**B**) as said first data in response to said first timing signal, and said real part (Br) of said third complex vector data (**B**) as said first data in response to a second timing signal of said timing signals,

said (c) selecting step comprises the step of:

selecting an imaginary part (Ai) of said first complex vector data (**A**) as said second data in response to said first timing signal, and in response to said second timing signal,

said (f) calculating step comprises the step of:

multiplying said imaginary part (Bi) of said second complex vector data (**B**) and said imaginary part (Ai) of said first complex vector data (**A**) in response to said second timing signal to generate first process first product data (Ai*Bi), and multiplying said real part (Br) of said second complex vector data (**B**) and said imaginary part (Ai) of said first complex vector data (**A**) in response to said third timing signal to generate second process first product data (Ai*Br),

said (d) selecting step comprises the step of:

selecting said real part (Br) of said second complex vector data (**B**) as said second data in response to said first timing signal and selecting said imaginary part (Bi) of said second complex vector data (**B**) as said third data in response to said second timing signal,

said (e) selecting step comprises the step of:

selecting said real part (Ar) of said first complex vector data (**A**) as said fourth data in response to said first timing signal and in response to said second timing signal,

said (g) calculating step comprises the step of:

multiplying said real part (Br) of said second complex vector data (**B**) and said real part (Ar) of said first complex vector data (**A**) in response to said second timing signal to generate first process second product data (Ar*Br), and multiplying said imaginary part (Bi) of said second complex vector data (**B**) and said real part (Ar) of said first complex vector data (**A**) in response to said third timing signal to generate second process second product data (Ar*Bi),

said (h) calculating step comprises the step of:

adding said first process first product data (Ai*Bi) and said first process second product data (Ar*Br) in response to said third timing signal to produce first process first addition resultant data (Ar*Br + Ai*Bi), and subtracting said second process second product data (Ar*Bi) from said second process first product data (Ai*Br)in response to said fourth timing signal to produce second process first subtraction resultant data (Ai*Br - Ar*Bi),

said (k) selecting step comprises the step of:

selecting said first process first addition resultant data (Ar*Br + Ai*Bi) as said seventh data in response to said fourth timing signal, and selecting said second process first subtraction resultant data (Ai*Br- Ar*Bi) as said seventh data in response to said fifth timing signal,

said (l) selecting step comprises the step of:

selecting 0 in response to said fourth timing signal, and in response to said fifth timing signal,

said (n) calculating step comprises the step of:

adding said first process first addition resultant data (Ar*Br + Ai*Bi) and said 0 in response to said fifth timing signal to produce first process third addition resultant data (Ar*Br + Ai*Bi), and adding said second process first addition resultant data (Ai*Br - Ar*Bi) and said 0 in response to said sixth timing signal to produce second process third addition resultant data (Ai*Br - Ar*Bi),

said (o) selecting step comprises the step of:

selecting said second process third addition resultant data (Ai*Br - Ar*Bi) in response to said seventh timing signal, and

said (p) selecting step comprises the step of:

selecting said first process third addition resultant data (Ar*Br + Ai*Bi), which is held in response to said sixth timing signal, in response to said seventh timing signal.

34. The method according to any of claim 30 to 33, wherein the complex vector operation to be carried out is said complex addition or subtraction operation between said first complex vector data (**A**) and said second complex vector data (**B**), and

said (i) selecting step comprises the step of:

selecting said imaginary part (Bi) of said second complex vector data (**B**) as said fifth data in response to said fourth timing signal,

said (j) selecting step comprises the step of:

selecting said imaginary part (Ai) of said first complex vector data (**A**) as said sixth data in response to said fourth timing signal,

said (m) calculating step comprises the step of:

calculating addition or subtraction between said imaginary part (Ai) of said first complex vector data (**A**) and said imaginary part (Bi) of said second complex vector data (**B**) in response to said fifth timing signal to produce first process second addition or subtraction resultant data (Ai $\pm$ Bi),

said (k) selecting step comprises the step of:

selecting said real part (Br) of said second complex vector data (**B**) as said seventh data in response to said fourth timing signal,

said (j) selecting step comprises the step of:

selecting said real part (Ar) of said first complex vector data (**A**) as said eighth data in response to said fourth timing signal,

said (n) calculating step comprises the step of:

calculating addition or subtraction between said real part (Ai) of said first complex vector data (**A**) and said real part (Bi) of said second complex vector data (**B**) in response to said fifth timing signal to produce first process third addition or subtraction resultant data (Ar $\pm$ Br),

said (o) selecting step comprises the step of:

selecting said first process second addition or subtraction resultant data (Ai $\pm$ Bi), which is held in response to said sixth timing signal, in response to said seventh timing signal, and

said (p) selecting step comprises the step of:

selecting said first process third addition or subtraction resultant data (Ar $\pm$ Br), which is held in response to said sixth timing signal, in response to said seventh timing signal.

35. The complex vector operation processor according to any of claim 30 to 34, wherein the complex vector operation to be carried out is said complex vector square power operation of said first complex vector data (**A**), and said (b) selecting step comprises the step of:

selecting said imaginary part (Ai) of said second complex vector data (**A**) as said first data in response to said first timing signal,

said (c) selecting step comprises the step of:

selecting said imaginary part (Ai) of said second complex vector data (**A**) as said first data in response to said first timing signal,

said (f) calculating step comprises the step of:

multiplying said imaginary part (Ai) of said first complex vector data (**A**) and said imaginary part (Ai) of said first complex vector data (**A**) in response to said second timing signal to generate first process first product data (Ai*Ai),

said (d) selecting step comprises the step of:

selecting said real part (Ar) of said first complex vector data (**A**) as said second data in response to said first timing signal,

said (e) selecting step comprises the step of:

selecting said real part (Ar) of said first complex vector data (**A**) as said fourth data in response to said first timing signal

said (g) calculating step comprises the step of:

multiplying said real part (Ar) of said first complex vector data (**A**) and said real part (Ar) of said first complex vector data (**A**) in response to said second timing signal to generate first process second product data (Ar*Ar),

said (h) calculating step comprises the step of:

adding said first process first product data (Ai*Ai) and said first process second product data (Ar*Ar) in response to said third timing signal to produce first process first addition resultant data (Ar*Ar + Ai*Ai),

said (k) selecting step comprises the step of:

selecting said first addition resultant data (Ar*Ar + Ai*Ai) as said seventh data in response to said fourth timing signal,

said (l) selecting step comprises the step of:

selecting 0 in response to said fourth timing signal,

said (n) calculating step comprises the step of:

adding said first addition resultant data (Ar*Ar + Ai*Ai) and said 0 in response to said fifth timing signal to produce first process third addition resultant data (Ar*Ar + Ai*Ai),

said (o) selecting step comprises the step of:

selecting said first process third addition resultant data (Ar*Ar + Ai*Ai), which is held in response to sixth timing signal, in response to said seventh timing signal.

36. The method according to any of claim 30 to 35, wherein the complex vector operation to be carried out is said real number - complex vector multiplication operation of said first complex vector data (**A**) and a first real number (k1), and
said (b) selecting step comprises the step of:

selecting said real number (k1) as said first data in response to said first timing signal,

said (c) selecting step comprises the step of:

selecting said imaginary part (Ai) of said second complex vector data (**A**) as said first data in response to said first timing signal,

said (f) calculating step comprises the step of:

multiplying said real number (k1) and said imaginary part (Ai) of said first complex vector data (**A**) in response to said second timing signal to generate first process first product data (k1*Ai),

said (d) selecting step comprises the step of:

selecting said real number (k1) as said second data in response to said first timing signal,

said (e) selecting step comprises the step of:

selecting said real part (Ar) of said first complex vector data (**A**) as said fourth data in response to said first timing signal,

said (g) calculating step comprises the step of:

multiplying said real number (k1) and said real part (Ar) of said first complex vector data (**A**) in response to said second timing signal to generate first process second product data (k1*Ar),

said (i) selecting step comprises the step of:

selecting said first process first product data (k1*Ai) as said seventh data, which is held in response to said third timing signal, in response to said fourth timing signal,

said (j) selecting step comprises the step of:

selecting 0 in response to said fourth timing signal,

said (m) calculating step comprises the step of:

adding said first process first product data (k1*Ai) and said 0 in response to said fifth timing signal to produce first process third addition resultant data (k1*Ai),

said (k) selecting step comprises the step of:

selecting said first process second product data (k1*Ar) as said seventh data, which is held in response to said third timing signal, in response to said fourth timing signal,

said (l) selecting step comprises the step of:

selecting 0 in response to said fourth timing signal,

said (n) calculating step comprises the step of:

adding said first process second product data (k1*Ai) and said 0 in response to said fifth timing signal to produce first process third addition resultant data (k1*Ar),

said (o) selecting step comprises the step of:

selecting said first process second addition resultant data (k1*Ai), which is held in response to sixth timing signal, in response to said seventh timing signal, and

said (p) selecting step comprises the step of:

selecting said first process third addition resultant data (k1*Ar), which is held in response to sixth timing signal, in response to said seventh timing signal.

Fig. 1 PRIOR ART

# Fig. 2 PRIOR ART

# Fig. 3A

EP 1 271 338 A2

# Fig. 3B

INSTRUCTION CONTROL UNIT

PIPELINE PROCESSING UNIT

DATA INPUT SHIFT SECTION

PIPELINE OPERATION SECTION

DATA OUTPUT SHIFT SECTION

49

# F i g . 4

| UPPER BIT PORTION | LOWER BIT PORTION |
|-------------------|-------------------|
| Ar[0] | Ai[0] |
| Ar[1] | Ai[1] |
| Ar[2] | Ai[2] |
| Ar[3] | Ai[3] |
| Br[0] | Bi[0] |
| Br[1] | Bi[1] |
| Br[2] | Bi[2] |
| Br[3] | Bi[3] |

# F i g . 5

| UPPER BIT PORTION | LOWER BIT PORTION |
|-------------------|-------------------|
| Dr[0] | Di[0] |
| Dr[1] | Di[1] |
| Dr[2] | Di[2] |
| Dr[3] | Di[3] |
| Dr[4] | Di[4] |
| Dr[5] | Di[5] |
| Dr[6] | Di[6] |
| Dr[7] | Di[7] |

# F i g . 6

| UPPER BIT PORTION | LOWER BIT PORTION |
|-------------------|-------------------|
| D[0] | D[1] |
| D[2] | D[3] |
| D[4] | D[5] |
| D[6] | D[7] |

# Fig. 7A

EP 1 271 338 A2

| | YL1 | YH1 | XL1 | XH1 | XL2 | XH2 | XL3 | XH3 | XL4 | XH4 | SEL2B | SEL2A | SEL1B | SEL1A | M2 | M1 | S1 |
|---|---|---|---|---|---|---|---|---|---|---|---|---|---|---|---|---|---|
| T1 | | | | | | | | | | | | | | | | | |
| T2 | Wi | Wr | Bi | Br | | | | | | | | | | | | | |
| T3 | Wi | Wr | Ai | Ar | Bi | Br | | | | | Wi | Bi | Wr | Br | | | |
| T4 | | | | | Ai | Ar | Bi | Br | | | Wr | Bi | Wi | Br | Bi*Wi | Br*Wr | |
| T5 | | | | | | | Ai | Ar | | | | | | | Bi*Wr | Br*Wi | Br*Wr-Bi*Wi |
| T6 | | | | | | | | | Ai | | | | | | | | Br*Wi+Bi*Wr |
| T7 | | | | | | | | | | | | | | | | | |
| T8 | | | | | | | | | | | | | | | | | |
| T9 | | | | | | | | | | | | | | | | | |
| T10 | | | | | | | | | | | | | | | | | |

# Fig. 7B

| | SEL4A | SEL4B | SEL3A | SEL3B | S2 | S3 | F2 | F3 | F1 | WH | WL |
|---|---|---|---|---|---|---|---|---|---|---|---|
| T1 | | | | | | | | | | | |
| T2 | | | | | | | | | | | |
| T3 | | | | | | | | | | | |
| T4 | | | | | | | | | | | |
| T5 | | | | | | | | | | | |
| T6 | Ar | Br*Wr-Bi*Wi | Ar | Br*Wr-Bi*Wi | | | | | | | |
| T7 | Ai | Br*Wi+Bi*Wr | Ai | Br*Wi+Bi*Wr | Cr | Dr | | | | | |
| T8 | | | | | Ci | Di | Cr | Dr | | | |
| T9 | | | | | | | Ci | Di | Dr | Cr | Ci |
| T10 | | | | | | | | | | Dr | Di |

Cr: Ar+(Br*Wr-Bi*Wi)
Ci: Ai+(Br*Wi+Bi*Wr)
Dr: Ar-(Br*Wr-Bi*Wi)
Di: Ai-(Br*Wi+Bi*Wr)

EP 1 271 338 A2

# Fig. 8

COMPLEX VECTOR OPERATION PROCESSOR

MAIN CPU

MAIN MEMORY

INSTRUCTION CONTROL UNIT

INSTRUCTION MEMORY

ADDRESS GENERATING UNIT

DATA INPUT/OUTPUT INTERFACE

DATA STORAGE UNIT

PIPELINE OPERATION UNIT

# Fig. 9

ADSL COMMUNICATION APPARATUS

133 — MEMORY

IN-APPARATUS CONTROL CPU — 132

—134

—1'

COMPLEX VECTOR OPERATION PROCESSOR

INSTRUCTION CONTROL UNIT

—16

INSTRUCTION MEMORY

14

ADDRESS GENERATING UNIT

—18

DATA STORAGE UNIT

—20

PIPELINE OPERATION UNIT

—22

UPPER LAYER PROCESSING SECTION

BASE BAND PROCESSING SECTION/ ATM INTERFACE SECTION

138 —

DATA INPUT/OUTPUT INTERFACE

—40

TIME DOMAIN SIGNAL PROCESSING SECTION/ AFE INTERFACE SECTION

AFE DEVICE

—136